# EUROPEAN PATENT APPLICATION

(11) **EP 4 082 942 A1**
(43) Date of publication of application: **02.11.2022**
(21) Application number: 20905941.9
(22) Date of filing: 27.11.2020
(51) Int. Cl.: B65G 1/137, B65G 61/00

(54) **PROJECTION INSTRUCTION DEVICE AND PROJECTION INSTRUCTION SYSTEM**

(30) Priority: 27.12.2019 JP 2019238999
(71) Applicant: Panasonic Intellectual Property Management Co., Ltd., Osaka-shi, Osaka 540-6207 (JP)
(72) Inventor: MORIYAMA Takaaki, Osaka-shi, Osaka 540-6207 (JP); HAGIWARA Daisuke, Osaka-shi, Osaka 540-6207 (JP); TAKAGI Takefumi, Osaka-shi, Osaka 540-6207 (JP); TANAKA Koshi, Osaka-shi, Osaka 540-6207 (JP); IDERA Takaaki, Osaka-shi, Osaka 540-6207 (JP)
(74) Representative: Eisenführ Speiser
(86) International application number: PCT/JP2020/044356
(87) International publication number: WO 2021/131500

(57) **Abstract**

A projection instruction device includes a processor and a memory configured to specify each of a plurality of packages and store package specifying information including information related to a destination of each of the packages in a factory. The projection instruction device generates a first projection image for instructing conveyance of the received package to a first destination that is a storage place based on the package specifying information for each package, instructs the image projection device to project the first projection image, in a case that the package specifying information for each package stored in the memory indicates a second destination, generates a second projection image for instructing conveyance of the package to the second destination, and instructs the image projection device to project the second projection image.

## Description

### TECHNICAL FIELD

The present disclosure relates to a projection instruction device and a projection instruction system that support package sorting.

### BACKGROUND ART

With a rise of economic activities in recent years, a distribution amount of packages is increasing. In a package distribution process, sorting work of sorting packages according to destinations tends to be manual work, which is time-consuming depending on proficiency of workers. In supply chain management (SCM), package distribution is a very important factor, and efficiency of SCM is expected to be improved by improving efficiency of package sorting work. In view of such circumstances, a technique of automating at least a part of the sorting work has also been proposed (for example, see Patent Literature 1).

Patent Literature 1 discloses a system that tracks a moving package, determines an image to be displayed based on information on the package and information on a position of the package read from the package, projects the image from a projector onto the package, and displays the image on the package.

### CITATION LIST

### PATENT LITERATURE

Patent Literature 1: Specification of US Patent No. 7090134

### SUMMARY OF INVENTION

### TECHNICAL PROBLEM

According to a technique of Patent Literature 1, a worker in charge of package sorting work can sort the package so as to move the package to a segment provided for each predetermined destination of the package according to the image projected from the projector. However, when an external instruction to add, change, or delete the information on the package to be received or shipped is suddenly issued for a predetermined content during the package sorting work of the package to be received or shipped in SCM, it is difficult for the work at a site to flexibly cope with the package sorting work according to the external instruction. Even when such an external instruction is suddenly issued, it is expected that a more satisfactory SCM can be provided as long as the package sorting work can be efficiently coped with. In a disclosure of Patent Literature 1, there is no technical consideration regarding improvement in efficiency of the sorting work when the external instruction to add, change, or delete the information on the above-described package is suddenly issued, and there is room for improvement in this respect as compared with the related art.

In view of the above circumstances in related art, an object of the present disclosure is to provide a projection instruction device and a projection instruction system that adaptively support improvement in efficiency of package sorting work and delivery even when an external instruction to add, change, or delete information on a package to be sorted is issued, which contributes to improvement in efficiency of package distribution.

### SOLUTION TO PROBLEM

The present disclosure provides a projection instruction device configured to instruct an image projection device to project a projection image onto a package received in a factory. The projection instruction device includes: a processor; and a memory configured to specify each of a plurality of packages and store package specifying information including information related to a destination of each of the plurality of packages in the factory. In cooperation with the memory, the processor is configured to generate a first projection image for instructing conveyance of the received package to a first destination that is a storage place based on the package specifying information for each of the packages stored in the memory and instructs the image projection device to project the first projection image, and in a case that the package specifying information for each of the packages stored in the memory indicates a priority of reception work, generate a second projection image indicating the priority of the reception work and instruct the image projection device to project the second projection image.

In addition, the present disclosure provides a projection instruction system in which a projection instruction device configured to instruct an image projection device to project a projection image onto a package received in a factory and a server are communicably connected to each other. The projection instruction device is configured to specify each of a plurality of packages to be received and store, in a memory, package specifying information including information related to a destination of each of the packages in the factory, generate a first projection image for instructing conveyance to a first destination, which is a storage place where the received package is stored, based on the package specifying information for each package stored in the memory and instructs the image projection device to project the first projection image, and in a case that the package specifying information for each of the packages stored in the memory indicates a priority of reception work, generate a second projection image indicating the priority of the reception work and instruct the image projection device to project the second projection image. The server is configured to transmit an external instruction including the package specifying information to the projection instruction device. The projection instruction device is configured to instruct the image projection device to project the first projection image or the second projection image based on the external instruction in response to receiving the external instruction from the server.

### ADVANTAGEOUS EFFECTS OF INVENTION

According to the present disclosure, even when an external instruction to add, change, or delete information on a package to be sorted is issued, improvement in efficiency of package sorting work and delivery can be adaptively supported, which contributes to improvement in efficiency of package distribution.

### BRIEF DESCRIPTION OF DRAWINGS

FIG. 1 is a block diagram showing an example of a configuration of a projection instruction system according to a first embodiment.
FIG. 2 is a conceptual view showing a status in which a package sorting system installed in a distribution center is operating.
FIG. 3 is a view showing a state in which a projection image including information such as a word and a numeral is projected on an upper surface of a package.
FIG. 4 is a view showing a UI screen displayed on a display unit of a truck transport management device.
FIG. 5 is a diagram showing a procedure of a package sorting operation in the projection instruction system.
FIG. 6 is a view showing an example of a projection pattern projected on an upper surface of a package.
FIG. 7 is a view showing another example of a projection pattern projected on an upper surface of a package.
FIG. 8 is a view showing still another example of a projection pattern projected on an upper surface of a package.
FIG. 9 is a diagram showing a procedure of an operation of sorting urgent packages in the projection instruction system.
FIG. 10 is a view showing a projection pattern projected on an upper surface of an urgent package.
FIG. 11 is a diagram showing a procedure of a package sorting operation in consideration of truck arrangement in the projection instruction system.
FIG. 12 is a view showing a projection pattern projected on an upper surface of a package whose loading position is designated.
FIG. 13 is a view showing a projection pattern projected on an upper surface of a package in consideration of package handling information.
FIG. 14 is a view showing a projection pattern projected on an upper surface of a package when the package is loaded on a next truck.
FIG. 15A is a view showing a projection pattern in which a projection image including provided information is projected in a gap between packages conveyed by a conveyance conveyor separately from a projection image that is a circular image.
FIG. 15B is a view showing a projection pattern in which a projection image including provided information is projected in a gap between packages conveyed by the conveyance conveyor separately from the projection image that is a circular image.
FIG. 16A is a flowchart showing an example of a schematic procedure of an operation mainly performed by a projection instruction device.
FIG. 16B is a flowchart showing an example of a schematic procedure of an operation mainly performed by the projection instruction device.
FIG. 17 is an explanatory view of an example of a projection position onto a package.
FIG. 18 is a diagram showing an example of a procedure for receiving and shipping packages in a projection instruction system according to a second embodiment.
FIG. 19 is a diagram showing a procedure of an operation of sorting received packages in the projection instruction system.

### DESCRIPTION OF EMBODIMENTS

Hereinafter, embodiments specifically disclosing a projection instruction device and a projection instruction system according to the present disclosure will be described in detail with reference to the drawings as appropriate. However, unnecessarily detailed description may be omitted. For example, detailed description of a well-known matter or repeated description of substantially the same configuration may be omitted. This is to avoid unnecessary redundancy in the following description and to facilitate understanding for those skilled in the art. The accompanying drawings and the following description are provided for those skilled in the art to fully understand the present disclosure, and are not intended to limit the subject matter described in the claims.

### (First Embodiment)

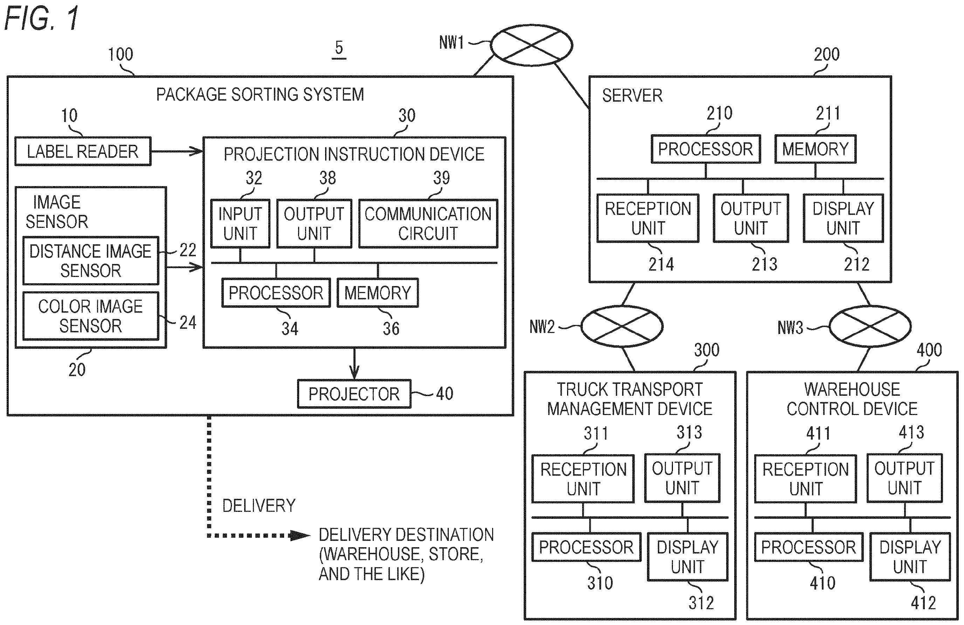

FIG. 1 is a block diagram showing an example of a configuration of a projection instruction system 5 according to a first embodiment. The projection instruction system 5 includes at least a package sorting system 100 and a server 200. The projection instruction system 5 may further include a truck transport management device 300 and a warehouse control device 400.

The package sorting system 100 is installed in, for example, a distribution center. The package sorting system 100 includes a label reader 10, an image sensor 20, a projection instruction device 30, and a projector 40 (an example of an image projection device), and is configured by connecting the label reader 10, the image sensor 20, the projection instruction device 30, and the projector 40 by wired communication or wireless communication. The package sorting system 100 supports work of a worker who sorts one or more packages conveyed by a conveyance conveyor for each delivery destination (destination). The conveyance conveyor may be, for example, a belt conveyor or a roller conveyor.

The distribution center in which the package sorting system 100 is installed is owned by, for example, a retailer, a wholesaler, or an Internet distributor. The package to be sorted is generally corrugated cardboard having a substantially rectangular parallelepiped shape in which a product or the like to be delivered is packed, but an outer shape thereof is not particularly limited, and a type of the package is not particularly limited. A configuration of the package sorting system 100 is not limited to a configuration shown in FIG. 1. For example, the number of components can be appropriately changed according to a purpose of sorting, such as connecting a plurality of image sensors 20, projection instruction devices 30, and projectors 40 to one label reader 10.

The label reader 10 is a device including optical components such as a lens and an image sensor. The label reader 10 can read label recording information in which various types of information on a package are recorded from a label attached to the package conveyed by the conveyance conveyor. The package can be specified by using the read label recording information. Package specifying information (in particular, package specifying information before update) is defined by the information read from the label.

Here, the package specifying information is information including at least one of a package specifying number, a name, an address and a telephone number of a sender, a name, an address and a telephone number of a recipient, a type of the package, and the like, which are individually assigned to the package. Examples of the label include a bar code and a two-dimensional code. The label reader 10 may be a dedicated device for reading a label or may be implemented by another configuration. For example, a general imaging camera may be used as the label reader 10, and an area of a label may be extracted from a captured image by image recognition to read label recording information, or a word or the like described on a label may be recognized by an optical character recognition/reader (OCR) to be used as label recording information. When a general imaging camera is used as the label reader 10, the image sensor 20 to be described later may be used as the label reader 10.

The image sensor 20 is an imaging device including optical components such as a lens and an image sensor. The image sensor 20 is generally configured as an imaging camera. The imaging camera is a three-dimensional camera, a plurality of two-dimensional cameras, or the like. The image sensor 20 captures an image of a package conveyed by the conveyance conveyor to generate a color image. The "color image" refers to an image in which a color of a surface of the package is expressed by a predetermined gradation, and the "gradation" includes not only 256 gradations of RGB but also all types such as a gray scale. By processing the color image using a predetermined algorithm, information indicating a position of the package, a distance to the package, a size of the package, and the like is obtained. In the present disclosure, the color of the surface of the package included in the color image captured by the image sensor 20 is used also in tracking of the package, which will be described later. The image sensor 20 may include a distance image sensor 22 that acquires a "distance image" in addition to a color image sensor 24 corresponding to the above-described imaging device. The "distance image" refers to an image containing distance information indicating a distance from an imaging position to a position (including the surface of the package) indicated by pixels. In addition, the term "distance image" includes a table listing numerical values indicating distances, which cannot be recognized as an image by human eyes. That is, the "distance image" may be any information indicating a relationship between coordinates and the distance in the captured area, and a data structure thereof does not matter. In general, since a sharp portion such as a corner of a package is hardly accurately reflected in information of the "distance image", processing according to the present embodiment is basically executed in the "color image", and hereinafter, the image sensor 20 will be described as a sensor the same as the color image sensor 24. However, when it is difficult to acquire an accurate color image such as in an extremely bright place or a dark place, a distance image may be supplementary used. In this case, for example, information indicating a position of a package, a distance to the package, a size of the package, and the like is obtained based on the distance image instead of a color image.

Hereinafter, an example of a procedure for obtaining information such as a position of a package from a color image will be described. In the first embodiment, a processor 34 calculates a distance from an imaging position to each pixel based on a two-dimensional color image captured by the image sensor 20. The processor 34 estimates a position of each package, a distance to the package, a size of the package, and the like based on information of the calculated distance. Here, as an example of a procedure of calculating the distance based on the two-dimensional color image, the processor 34 uses a fact that the closer an object is to the image sensor 20, the larger movement of the pixels corresponding to the object in the color image is when tracking in a chronological order. That is, first, the processor 34 estimates a movement distance of the same pixel in the color image using a color of each pixel as a clue. Then, the processor 34 converts the movement distance in the color image into a height and a movement distance in a real space based on an actual movement speed estimated for a portion corresponding to the pixel and a three-dimensional positional relationship between the image sensor 20 and a plane serving as a reference of movement of the object. Here, in the first embodiment, the package moves substantially at a speed the same as a conveyance speed of the conveyance conveyor unless the worker touches the package or the packages collide with each other, and thus the conveyance speed can be regarded as the movement speed of the package. The processor 34 can also estimate a speed in a complicated movement by using a result of tracking the package according to a method to be described later. In addition, the processor 34 can obtain information on the three-dimensional positional relationship between the image sensor 20 and the plane serving as the reference of the movement of the object (a conveyance surface of the conveyance conveyor in the first embodiment) by actual measurement at the time of installation of the package sorting system 100.

The projection instruction device 30 serves as a computing device in the package sorting system 100. The projection instruction device 30 includes an input unit 32, a processor 34, a memory 36, and an output unit 38, which are connected via a bus. The input unit 32 receives package specifying information capable of specifying a package, which is acquired from label recording information read by the label reader 10, and a color image generated by the image sensor 20. The processor 34 includes a general computing device, and generates a projection image to be projected on the package based on the package specifying information and the color image. In the memory 36 as a storage device, the processor 34 performs operations such as reading a control program required for various types of processing and saving data. That is, the processor 34 and the memory 36 cooperate with each other to control various types of processing executed by the projection instruction device 30. The output unit 38 outputs the projection image generated by the processor 34 to the projector 40. In the present disclosure, the "processor" does not mean only a single processor. The "processor" is also used as a term meaning an operation subject when a plurality of processors having the same purpose or processors having different purposes (for example, a general-purpose central processing unit (CPU) and a graphical processing unit (GPU)) execute processing in cooperation with each other.

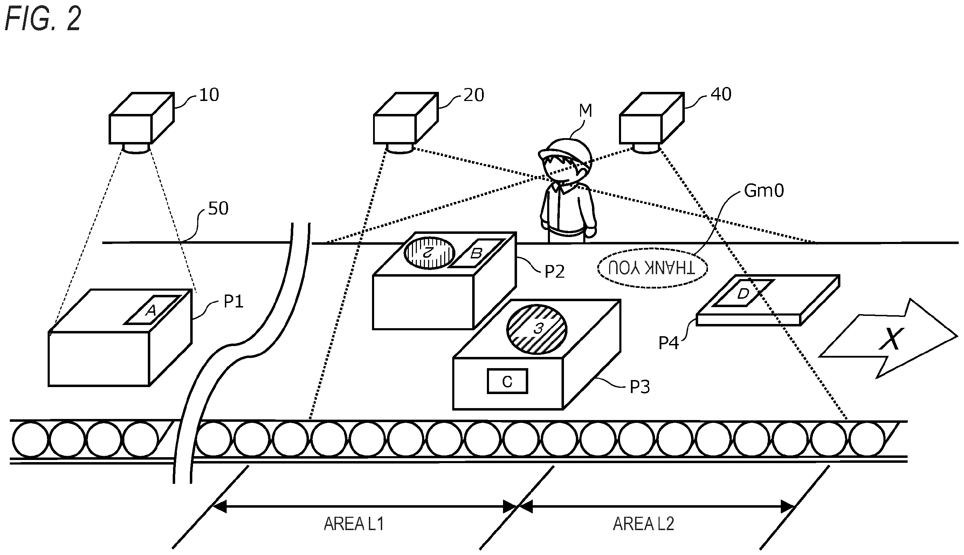

The projector 40 as the example of the image projection device includes a general image projection device, projects projection light including the projection image received from the projection instruction device 30 onto the package, and displays the projection light on the package. In FIG. 2, the projector 40 projects projection images onto a plurality of packages by projecting one image onto a wide range including the plurality of packages. In this case, the projector 40 can only project the projection images onto the packages as a result of projecting a black image onto a portion where the image are not to be projected. According to such a configuration, the projection instruction device 30 can cope with a variation in the number of packages on which projection images are to be projected by changing an image projected by the projector 40. In the present disclosure, the "projector" is not limited to a projector that directly projects a light beam onto a package. For example, the "projector" includes glasses, a head-mounted display, and the like capable of displaying an image. That is, in the present disclosure, when an expression such as projecting projection light onto a package, displaying an image on a package, or projecting an image on a package is used, the expression also includes causing a worker to recognize as if the projection light is projected onto the package in a pseudo manner via glasses, a head-mounted display, or the like capable of displaying the image. That is, when the worker wears special glasses capable of displaying an image, the projector 40 may superimpose a projection image here on the image of a package visually recognized via the glasses. When an image to be projected is a simple image, the projector 40 may use a laser pointer or the like. Details of a procedure in which the projector 40 projects a projection image onto a package will be described later.

The package sorting system 100 can be configured by connecting the label reader 10, the image sensor 20, the projection instruction device 30, and the projector 40 by wired communication or wireless communication. Two or more of the label reader 10, the image sensor 20, the projection instruction device 30, and the projector 40 may be configured as an integrated device. For example, the image sensor 20 and the projector 40 may be combined to form an integrated imaging projection device (see FIG. 2).

The server 200 includes a processor 210, a memory 211, a display unit 212, an output unit 213, and a reception unit 214. The server 200 may further include a storage unit (not shown) such as a recording device. The processor 210 comprehensively controls an operation of the server 200. For example, the processor 210 executes programs held in the memory 211 to implement various functions including signal processing, input and output processing, computing processing, storage processing, and the like. The processor 210 may include a micro processing unit (MPU), a central processing unit (CPU), a digital signal processor (DSP), a graphical processing unit (GPU), and the like. The server 200 may be a general computer, and may be integrated with or separate from the package sorting system 100. In addition, the server 200 may be installed at the same place or may be installed at a distant place. At least a part of processing of the server 200 described in the present embodiment may be executed by the projection instruction device 30 of the package sorting system 100.

The memory 211 includes a primary storage device (for example, a random access memory (RAM) or a read only memory (ROM)). The storage unit (not shown) may include a secondary storage device (for example, a hard disk drive (HDD) or a solid state drive (SSD)) or a tertiary storage device (for example, an optical disk or an SD card). The memory 211 stores various types of data, information, and programs.

The display unit 212 may include a liquid crystal display device, an organic electronic luminescent (EL) device, or other display devices. The display unit displays various types of data and information.

The output unit 213 and the reception unit 214 constitute a communication circuit in which the output unit 213 executes transmission processing and the reception unit 214 executes reception processing. The communication circuit performs communication in a wireless or wired manner. A communication method of the communication circuit may include, for example, communication methods such as a wide area network (WAN), a local area network (LAN), power line communication, short-distance wireless communication (for example, Bluetooth (registered trademark) communication), and communication for a mobile phone. The communication circuit communicates various types of data and information. The communication circuit includes a network interface connectable to a network NW, a short-distance wireless communication interface, and the like.

The output unit 213 and the reception unit 214 communicate with the package sorting system 100 via a network NW1. The output unit 213 and the reception unit 214 communicate with the truck transport management device 300 via a network NW2. The output unit 213 and the reception unit 214 communicate with the warehouse control device 400 via a network NW3.

The server 200 can receive weather information and traffic information (including traffic jam information) from an external institution (for example, Meteorological Agency, or Japan Road Traffic Information Center). The server 200 is connected to the external institution via one of the networks NW1, NW2, NW3. The server 200 can receive truck arrangement status information, route information of each truck, and loading amount information of a truck being sorted (loaded) from the truck transport management device 300. The loading amount information of the truck may be daily information in addition to real-time information. The server 200 can receive information such as the number of workers in a warehouse, a work level, and the number of packages for each delivery destination from the warehouse control device 400. The work level includes a sorting level, a speed, a sorting amount, an average conveyor speed, and the like of each worker. These pieces of information may be created and held by the package sorting system 100 and provided to the server 200.

The server 200 can receive information on a package capacity (that may include a package capacity for each delivery destination and information on a loading rate of a truck), a real-time sorting status, and an achievement degree of packages from the package sorting system 100. The package capacity is a value representing a size of the packages calculated based on a size of a package. The server 200 can receive, as package information, attention information (attention to handling, fragile item, or the like) and destination information (a destination may be changed on the way) on the packages.

The truck transport management device 300 includes a processor 310, a display unit 312, an output unit 313, and a reception unit 311. The processor 310 comprehensively controls an operation of the truck transport management device 300. The processor 310 includes a built-in memory and implements various functions by executing programs stored in the memory, for example. The processor may include a micro processing unit (MPU), a central processing unit (CPU), a digital processor (DSP), a graphical processing unit (GPU), and the like.

The output unit 313 and the reception unit 311 constitute a communication circuit in which the output unit 313 executes transmission processing and the reception unit 311 executes reception processing. The communication circuit performs communication in a wireless or wired manner. A communication method of the communication circuit may include, for example, communication methods such as a wide area network (WAN), a local area network (LAN), power line communication, short-distance wireless communication (for example, Bluetooth (registered trademark) communication), and communication for a mobile phone. The communication circuit communicates various types of data and information. The communication circuit includes a network interface connectable to a network NW, a short-distance wireless communication interface, and the like. The output unit 313 and the reception unit 311 communicate with the server 200 via the network NW2.

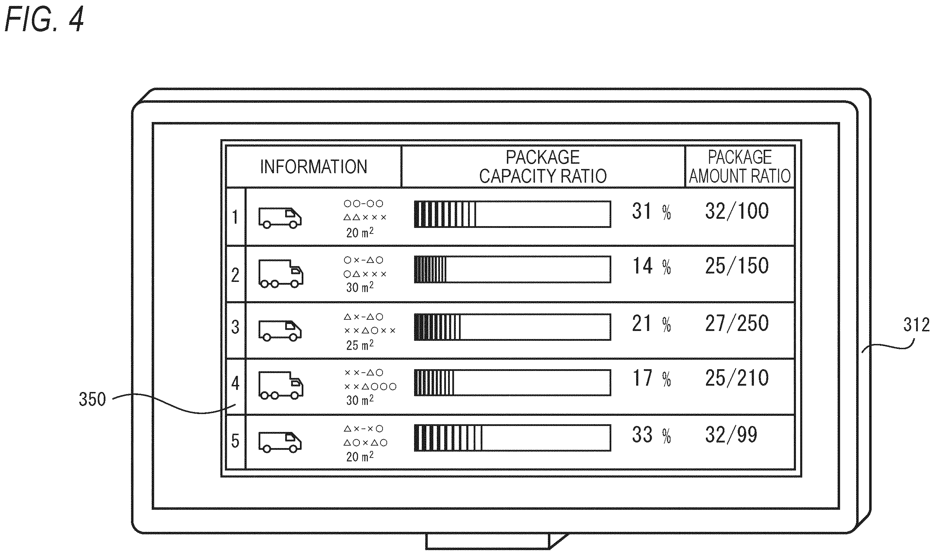

The display unit 312 displays a user interface (UI) screen 350 (see FIG. 4) that displays a loading status of a truck. The display unit 312 may include a liquid crystal display device, an organic electronic luminescent (EL) device, or other display devices. The display unit 312 displays various other types of data and information.

The warehouse control device 400 includes a processor 410, a display unit 412, an output unit 413, and a reception unit 411. The processor 410 comprehensively controls an operation of the warehouse control device 400. The processor 410 includes a built-in memory and implements various functions by executing programs stored in the memory, for example. The processor may include a micro processing unit (MPU), a central processing unit (CPU), a digital processor (DSP), a graphical processing unit (GPU), and the like.

The output unit 413 and the reception unit 411 constitute a communication circuit in which the output unit 413 executes transmission processing and the reception unit 411 executes reception processing. The communication circuit performs communication in a wireless or wired manner. A communication method of the communication circuit may include, for example, communication methods such as a wide area network (WAN), a local area network (LAN), power line communication, short-distance wireless communication (for example, Bluetooth (registered trademark) communication), and communication for a mobile phone. The communication circuit communicates various types of data and information. The communication circuit includes a network interface connectable to a network NW, a short-distance wireless communication interface, and the like. The output unit 413 and the reception unit 411 communicate with the server 200 via the network NW3.

The display unit 412 displays a status of the warehouse. The display unit 412 may include a liquid crystal display device, an organic electronic luminescent (EL) device, or other display devices. The display unit 412 displays various other types of data and information.

Although the projection instruction system 5 includes the server 200, the truck transport management device 300, and the warehouse control device 400 as separate devices in the first embodiment, the server may include the truck transport management device and the warehouse control device. In the present embodiment, the networks NW1, NW2, NW3 include separate networks, and may include the same network.

FIG. 2 is a conceptual view showing a status in which the package sorting system 100 installed in the distribution center is operating. The conveyance conveyor 50 is a conveyor that conveys packages in a conveyance direction X, and the label reader 10 is disposed above the conveyance conveyor 50. The label reader 10 reads a label attached to each package P conveyed by the conveyance conveyor 50. Here, an example in which the label reader 10 and other components are separated from each other is shown, but the label reader 10 may be close to or integrated with other components.

The label reader 10 reads the label attached to each package P (packages P1 to P4 are collectively referred to as the baggage P; the same applies hereinafter) conveyed by the conveyance conveyor 50 as the package P. The label describes label recording information including various types of information on the package. The label recording information includes information similar to a package specifying number, a name, an address and a telephone number of a sender, a name, an address and a telephone number of a recipient, a type of the package, and the like, which are individually assigned to the package. It is not necessary to read all the label recording information from the label attached to the package P. For example, only identification information associated with the label recording information may be stored in the label, and the label recording information may be searched from another recording device using the identification information read from the label. Unless otherwise specified, the label recording information is read in both cases in the present disclosure. The label may be read by manually placing a barcode reader as the label reader 10 on a barcode in the label by a worker in charge. FIG. 2 shows a state in which the label reader 10 reads label recording information "A" from a label attached to the package P1.

Next, an outline of processing executed below the conveyance conveyor 50 will be described.

The image sensor 20 captures a color image of the package P conveyed by the conveyance conveyor 50. Based on the color image, the processor 34 acquires (calculates) information such as a position of the package P, a distance to the package P, a size of the package P (lengths of three sides when the package P is a rectangular parallelepiped), a color of the package P, a pattern of the package P, and the like. Arrangement positions of the label reader 10 and the image sensor 20, a type of a sensing device, and an order of the processing are not particularly limited to those shown in the drawing. In this example, the image sensor 20 and the projector 40 are configured as an integrated imaging projection device 60, and are disposed above the conveyance conveyor 50.

The projection instruction device 30 includes, for example, a computer disposed in vicinity of the conveyance conveyor 50 or in another room, and generates a projection image to be displayed on the package P (for example, an upper surface when the package P is a rectangular parallelepiped) based on information specifying the package acquired by the label reader 10 and the color image generated by the image sensor 20. The projection instruction device 30 transmits, to the projector 40, a projection instruction to project the projection image on the package P. Upon receiving the projection instruction, the projector 40 projects projection light including the projection image generated by the projection instruction device 30 onto the package P, and displays the projection image on the package P.

In the present disclosure, the "projector (the example of the image projection device)" is not limited to a projector that directly projects a light beam onto a package. In the present disclosure, the "projector (the example of the image projection device)" includes glasses, a head-mounted display, and the like capable of displaying an image. That is, in the present disclosure, when an expression such as projecting projection light onto a package, displaying an image on a package, or projecting an image onto a package is used, the expression also includes causing a worker to recognize as if the projection light is projected onto the package in a pseudo manner via glasses capable of displaying the image. That is, when the worker wears special glasses capable of displaying an image, a projection image here may be superimposed on the image of the package P visually recognized via the glasses.

A worker M in charge of picking up the package stands beside the conveyance conveyor 50, picks up the package that has reached an area of the worker M from the conveyance conveyor 50, and loads the package onto a standby truck.

For example, the label attached to the package P1 includes package specifying information such as "A" as the label recording information. The package specifying information of "A" specifies that the package is to be sorted in any specified area (hereinafter, referred to as a specific area) of a plurality of areas L1, L2. Therefore, when the package P1 arrives at the specific area, the processor 34 transmits data of a projection image generated based on the package specifying information of the package P1 to the projector 40. The projector 40 projects the projection image onto the package P1.

For example, a label attached to the package P2 includes package specifying information such as "B" as the label recording information. The package specifying information "B" may be package identification information for identifying each package, or may include information indicating an area (specific area) where the package is to be sorted. When the package specifying information is the package identification information, the package specifying information itself does not include information indicating a specific area. Therefore, the specific area in this case is determined by the projection instruction device 30. More specifically, the projection instruction device 30 specifies a sorting destination of the package with reference to the package identification information and the information indicating the sorting destination stored in association with a server of a delivery center. Then, the projection instruction device 30 determines the specific area with reference to information indicating a correspondence relationship between the sorting destination of the package and the specific area stored in the projection instruction device 30 itself or another server.

When the package P arrives at the specific area, the processor 34 transmits data of a projection image generated based on the package specifying information of the package P to the projector 40. The projector 40 projects the projection image onto the package P. When the package P is not picked up and goes out of the specific area, the processor 34 may stop projection on the package P, or may project a dedicated error message on a place other than the package P on the conveyance conveyor 50 or on the package P. The processor 34 stops the projection or projects a projection image including an error onto the place other than the package P or onto the package P because the package outside the specific area has passed through a place where the package is to be picked up. If it is not necessary to urge the worker M to pay attention, as long as the package P is present in an area where an image can be projected by the projector 40, the processor 34 may continue to project a projection image the same as that in a case where the package P is present in the specific area.

For example, FIG. 2 shows an example in which specific areas including the area L1 and the area L2 divided along the conveyance direction of the conveyance conveyor 50 are present, a specific area of the conveyed package P is the area L1, and projection of a package out of the specific area is stopped.

Since a plurality of packages P2, P3 are present in the area L1 that is the specific area, projection images "2" and "3" are projected thereon, respectively. On the other hand, since the package P4 is out of the area L1 that is the specific area, a projection image is not projected even though the package P4 is included in a range where the projector 40 can project.

An association between the package identification information and the sorting destination and an association between information on the sorting destination and the specific area may not be fixed. In these associations, the sorting destination or specific area may be changed as appropriate depending on various parameters such as a workload of the worker M, a traffic situation, and a change in delivery destination. The package sorting system 100 can quickly cope with a situation change such as a workload of each worker, a traffic situation, and a change in delivery destination by changing each association as needed.

FIG. 2 shows the worker M only on one back side of the conveyance conveyor 50, but the worker M may be arranged on both sides or only on a front side of the conveyance conveyor 50. The number and arrangement of workers may be appropriately changed depending on arrangement of other equipment provided around the conveyance conveyor 50, whether there is more package P to be sorted on the back side or the front side, or the like.

In FIG. 2, the projection image projected onto the package P is directed in a direction in which the worker can easily recognize. That is, since there is a high possibility that a worker on the back side picks up the package P2 and a worker on the front side picks up the package P3, the projection images "2" and "3" are respectively projected from respective positions toward angles for easy reading.

Each of the packages P does not need to be associated with one specific area, and may be associated with a plurality of adjacent or distant specific areas. The specific area does not need to be divided along the conveyance direction X of the conveyance conveyor 50, and may be divided in a direction perpendicular to the conveyance direction X, or may be divided in another shape. For example, when a workable area is physically or psychologically limited, such as when the worker M is sitting or there is a place where the worker M cannot move, only a periphery of the area where the worker M can work may be set as the specific area.

### (Variation of Projection Image)

In the example described above, the projection image projected onto the package P is, for example, an image of a circled numeral having a color indicating a sorting place corresponding to a delivery destination address of the package P (see FIG. 2). Here, the circled numeral corresponds to, for example, a number of a truck carrying the sorted package P (a number of the truck itself, a parking lot number, or the like), a number of a shelf, a box, or the like to be carried into the truck or the like, or the like.

The projection image projected on the package P may correspond to a number of a chute that moves the picked up package to another place, a truck, or the like, instead of directly corresponding to a number of a shelf, a box, or the like. Since a parking position of the truck or the like frequently changes due to a traffic situation or the like, it may be difficult to correspond to a sorting destination as needed as viewed from around the conveyance conveyor 50. Therefore, the chute is disposed so as to be sandwiched between the conveyance conveyor 50 and a conveyance truck or the like, and arrangement of an outlet is changed due to a change in sorting destination. The projector 40 projects the number of the chute onto the package P around the conveyance conveyor 50, so that it is possible to cope with the change in sorting destination without changing a configuration around the conveyance conveyor 50 as needed. It is needless to say that various types of projection images may be generated and projected depending on the situation.

As another example, when a numeral is projected, the processor 34 may generate a projection image including a postal code corresponding to a delivery destination address, a number of a worker who should pick up the package P, and the like, and cause the projector 40 to project the projection image. An example of the projection image including information other than the numeral may be an arrow indicating a sorting direction (right, left, or the like with respect to the conveyance direction of the conveyance conveyor 50) or a word ("left", "right", or the like). Further, an example of the projection image is not limited to the circled number, and various numerals such as a numeral surrounded by a rectangular frame may be considered. Further, the projection image may have a painted background, or may have a frame surrounding a numeral or a word. In the projection image, a content of the projection image may be changed as needed, for example, by switching a shape of a numeral or a word to be projected, such as a circle, a triangle, or a square, according to information projected on the package P. In addition, the projection image may be generated to include a picture that can be individually associated with each piece of information to be projected.

The projection image is not limited to a still image, and may be an animation. As an example of the animation, each example of the projection image may be projected by blinking, the projection image may be enlarged or reduced on the package P, or a color may be changed. The projector 40 may project an animation reflecting a sorting direction of each package P. Examples of the animation reflecting the sorting direction may include various types of animation such as moving a light beam, a light spot, or the like toward the sorting direction, projecting a projection image such that the whole or a part of the projection image moves toward the sorting direction, changing a color of the whole or a part of the projection image, and projecting the projection image by moving an arrow in the sorting direction. When only a part of the projection image is to be subjected to animation, it is conceivable that the projection image does not change in a portion having a large influence on determination of the sorting destination by the worker, such as a numeral or an arrow, but changes in a portion having a small influence on the sorting destination, such as a frame line or a background. However, in a situation in which it is more efficient to intuitively transmit the sorting direction than a meaning of a numeral or the like projected within a frame line, such as a situation in which, there are few options of sorting destinations, the projection image may be projected so as to move a numeral, an arrow, or the like in the sorting direction within a fixed frame line. The animation may be repeatedly projected or may be projected only once.

Further, the processor 34 specifies a gap between the packages P conveyed by the conveyance conveyor 50, and generates a projection image Gm0 "Thank you" including provided information different from the projection image. The processor 34 may transmit the projection image Gm0 to the projector 40 and cause the projector 40 to project the projection image Gm0 onto the gap between the packages P. For example, when the package sorting system 100 determines that a workload of another worker is large, the "Thank you" shown in the projection image Gm0 may instruct the worker M to sort packages of another worker. In such a case, the processor 34 generates a message image of "Thank you" shown in the projection image Gm0 as a message of gratitude for the worker M assisting sorting work of another worker after instructed package sorting work is finished, and projects the message image onto the gap between the packages P around the worker M and on the conveyance conveyor 50. An example in which the projection image Gm0 is projected is not limited to the above-described example. For example, the projection image Gm0 may be a message image that supports work of the worker, which is projected when sorting work of urgent packages occurs or the like, or that gives gratitude to the worker.

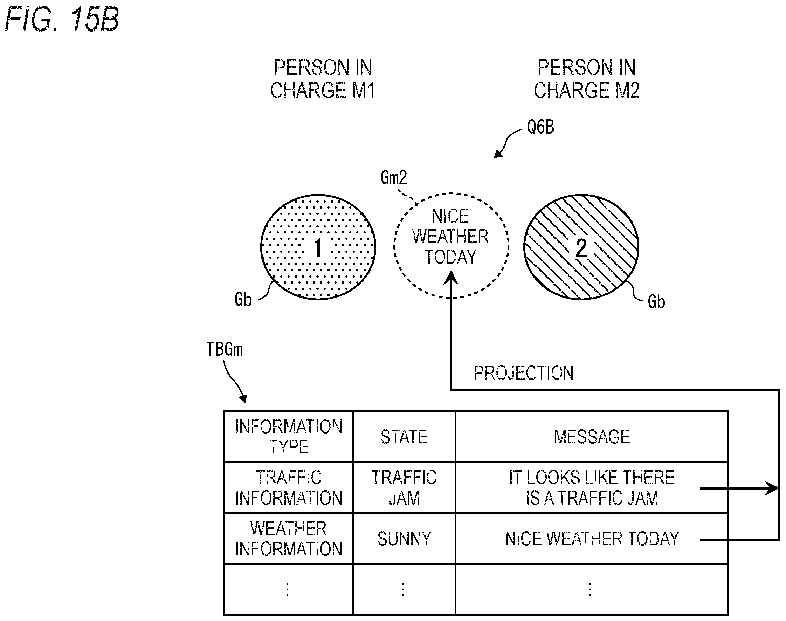

The projection image Gm0 may be generated not only by the processor 34 but also by, for example, the server 200 that acquires weather information, traffic jam information, and the like from outside, and may be transmitted to the package sorting system 100. An example of generation of such a projection image projected toward the worker will be described in more detail with reference to FIG. 15B.

### (Outline of Operation)

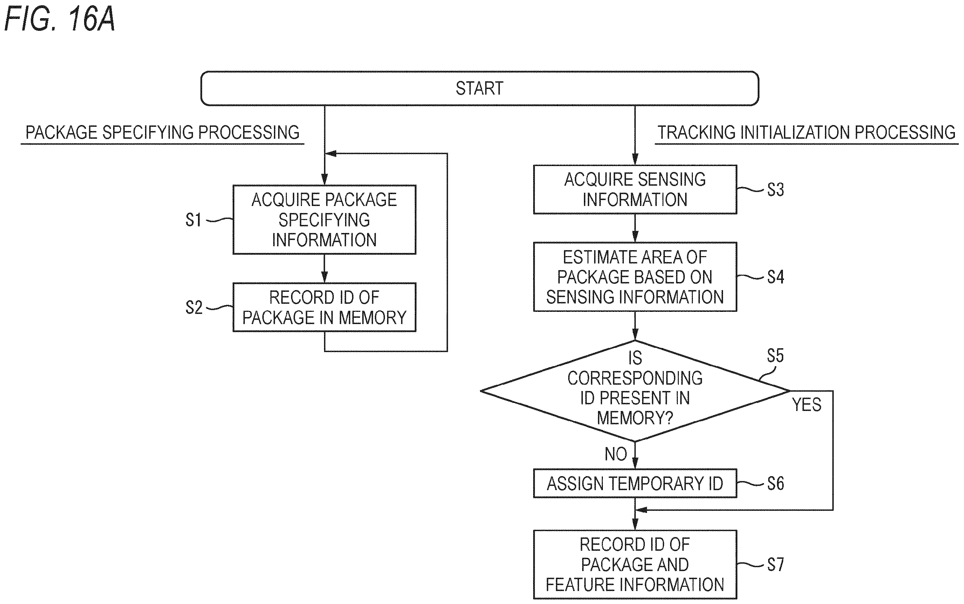

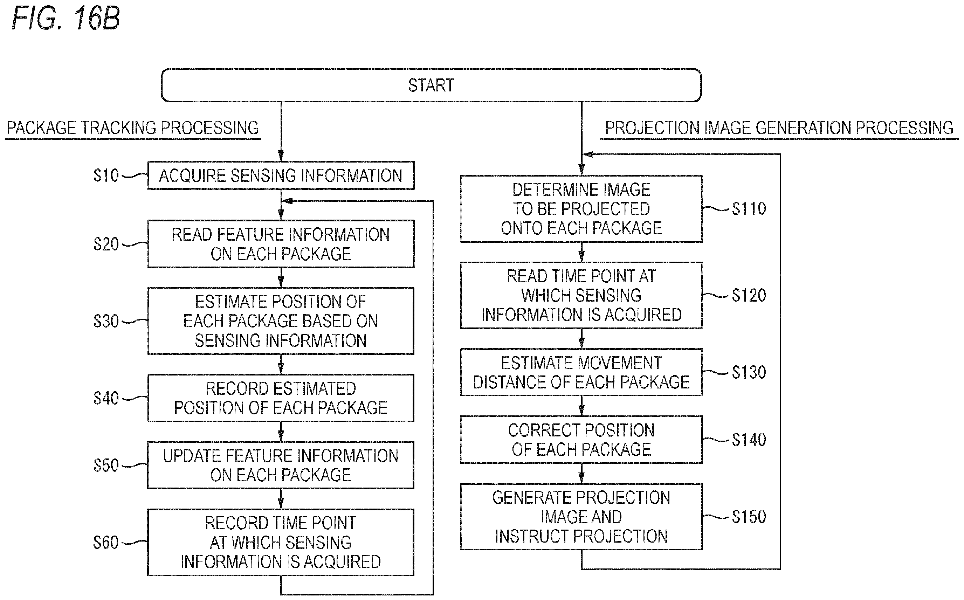

Hereinafter, a basic operation of the package sorting system 100 will be described. FIG. 16A is a flowchart showing an example of a schematic procedure of an operation mainly performed by the projection instruction device 30 according to the first embodiment, in particular, the processor 34 of the projection instruction device 30. FIG. 16B is a flowchart showing an example of a schematic procedure of an operation mainly performed by the projection instruction device 30 according to the first embodiment, particularly, the processor 34 of the projection instruction device 30. In the present disclosure, for convenience of description, FIG. 16A mainly shows the example of the procedure until the package P enters an area where a projection image can be projected, and FIG. 16B mainly shows the example of processing until the projection image is projected. Hereinafter, processing described on a left side of FIG. 16A (steps S1 and S2) is referred to as "package specifying processing", and processing described on a right side thereof (steps S3 to S7) is referred to as "tracking initialization processing". Processing described on a left side of FIG. 16B (steps S10, S20, S30, S40, S50, and S60) is referred to as "package tracking processing", and processing described on a right side of FIG. 16B (steps S110, S120, S130, S140, and S150) is referred to as "projection image generation processing". In the present disclosure, these four types of processing are executed in parallel, but speeds of the processing may be different. In particular, in the processing described in FIG. 16B, as will be described later, there is a high possibility that the "package tracking processing" is slower than the "projection image generation processing".

### (Package Specifying Processing)

Hereinafter, the package specifying processing will be described in detail.

In FIG. 16A, first, the label reader 10 reads label recording information of a label attached to the package P. The projection instruction device 30 acquires package specifying information corresponding to the label recording information from the label reader 10 via the input unit 32 (S1). The package specifying information is information including at least one of a package specifying number, a name, an address and a telephone number of a sender, a name, an address and a telephone number of a recipient, a type of package, and the like, which are individually assigned to the package.

The processor 34 assigns an ID, which is an identifier for specifying the package, to the package specifying information, and records the ID in the memory 36 together with time point information corresponding to a time point at which the ID is assigned (S2). The ID recorded in the memory 36 may be a package specifying number originally recorded in the package specifying information, or the projection instruction device 30 may generate and assign a new ID.

The label reader 10 has a limit to the number of labels that can be read at the same time, or if the number of labels that can be read at the same time increases, a reading accuracy of the label reader 10 may decrease. In such a case, the package sorting system 100 may provide a wall on the conveyance conveyor 50 to reduce the number of packages passing through an area where the label reader 10 reads the label (tracking initialization processing).

Hereinafter, details of the tracking initialization processing shown in FIG. 16A will be described.

In this processing, the input unit 32 of the projection instruction device 30 acquires a color image (sensing information) captured by the image sensor 20 (S3). The color image acquired here may include at least a periphery of an area where the projection image starts to be projected.

The processor 34 estimates an area where the package is present by specifying an area of an object other than the conveyance conveyor 50 based on the color image (S4). The area of the object other than the conveyance conveyor 50 can be specified, for example, by excluding an area similar to a color of the conveyance conveyor 50, or by calculating three-dimensional coordinates by analyzing the color image and extracting an area having a height different from that of the conveyance conveyor 50. In the former method, an object having a color similar to that of the conveyance conveyor 50 may be missed, and in the latter method, an object having a small thickness may be missed. Therefore, an object may be extracted more reliably by using both methods together.

Subsequently, the processor 34 determines whether the ID corresponding to each package is present in the memory 36 (S5). More specifically, the processor 34 estimates time required for the package P to move between the label reader 10 and an area where the image sensor 20 can capture an image, based on a distance between the label reader 10 and the image sensor 20 and a speed of the conveyance conveyor 50. The distance is obtained by, for example, actual measurement when the package sorting system 100 is installed. Then, the processor 34 estimates the time point at which the ID is assigned to the package P by subtracting the calculated time from a time point at which each image of the package is acquired. The processor 34 determines that the ID assigned at a time point close to the estimated time point (for example, a time point at which a difference is equal to or smaller than a predetermined threshold) is an ID corresponding to the package P. When a time point at which any ID is assigned is separated from the estimated time point, it is determined that the ID corresponding to the package is not present in the memory 36.

When it is determined that the ID corresponding to the package P is present in the memory 36 (S5; YES), the processor 34 proceeds to the processing of step S7 and the subsequent steps. On the other hand, when it is determined that the ID corresponding to the package P is not present in the memory 36 (S5; NO), the processor 34 assigns a temporary ID to the package (S6). The temporary ID may be an ID different from the ID already present in the memory 36. However, since the temporary ID can also be used as information indicating an occurrence of an error, the temporary ID may be an ID that can be clearly distinguished from the ID present in the memory 36. For example, when a package can be specified, an ID of a numeral may be assigned, and an ID of an alphabet may be assigned as a temporary ID.

The processor 34 acquires feature information on each package, associates the feature information with the ID, and records the feature information in the memory 36 (S7). Here, the feature information is information used in the package tracking processing to determine which of known packages each package is the same as. In the present embodiment, for example, a feature amount of a color of a package is used. That is, in the present embodiment, packages having similar colors at different time points are determined to be the same package. Here, by using the feature amount of the color in vicinity of a center of the package as the feature information, the package can be tracked relatively stably even when the packages are adjacent to or overlapped with each other.

### (Package Tracking Processing)

Hereinafter, the package tracking processing shown in FIG. 16B will be described in detail.

First, the input unit 32 of the projection instruction device 30 acquires a color image (sensing information) captured by the image sensor 20 (S10). The color image acquired here includes at least an area where a projection image is projected onto a package. The projection instruction device 30 may use the same color image when an imaging range of the color image acquired in step S3 has a size including at least the area where the projection image is projected onto the package.

The processor 34 reads an ID of each package and feature information on each package corresponding to the ID from the memory 36 (S20).

The processor 34 estimates a position of each package by estimating that each package is present in a portion similar to the feature information on each package in the color image (S30).

Then, the processor 34 records the estimated position of each package in the memory 36 in association with the ID of each package (S40). The processor 34 recalculates the estimated feature amount of each package and records (updates) the feature amount in the memory 36 (S50). This is because the package P in the first embodiment is moved by the conveyance conveyor 50, and therefore, even for the same package, the feature amount changes little by little due to a positional relationship with illumination or the like. That is, the processor 34 according to the first embodiment can more reliably cope with such a change in the feature amount by updating the feature amount of the package as needed. The processor 34 may omit the processing of step S50 when an imaging environment is highly stable.

The processor 34 records a time point at which the color image is acquired in the memory 36 (S60). This time point is referred to by the processor 34 when processing of generating the projection image to be described later is executed. When the time point at which the image sensor 20 acquires the color image is different for each package, the processor 34 may record and update an imaging time point in association with the ID of each package. Since the time point at which the color image is acquired is known at the time of step S10, the processing of step S60 may be executed before steps S20 to S50.

### (Projection Image Generation Processing)

Next, the projection image generation processing shown in FIG. 16B will be described.

In this processing, the projection image to be projected onto the package is generated. The position of the package (corresponding to a position where the projection image is to be projected) used when the projection image is generated in the present disclosure is not the position of the package estimated in the "package tracking processing", but is a position obtained by correcting the position. Hereinafter, a background of such correction will be described.

As shown in FIG. 16B, the package sorting system 100 according to the first embodiment executes the "package tracking processing" that requires acquisition of the color image (sensing information) and the "projection image generation processing" in parallel. This is because the "projection image generation processing" is often executed at a speed higher than that of the "package tracking processing". It is known that humans generally feel flickering in a moving image updated at a frequency of lower than 30 fps. Therefore, in order to prevent flickering of the projection image, it is necessary to execute the "projection image generation processing" at a frequency of 30 fps or higher. In contrast, it is difficult to execute processing of acquiring the color image particularly in the "package tracking processing" at a frequency of 30 fps or higher unless a special imaging device is used. Therefore, when a processing speed is restricted to that in the "package tracking processing", the projection image may flicker when viewed from the worker. Therefore, the package sorting system 100 according to the first embodiment is configured to execute the "projection image generation processing" and the "package tracking processing" in parallel.

However, when the package sorting system 100 adopts such a configuration in an environment where the package continues to move like the conveyance conveyor 50, the following problem occurs. That is, in the "package tracking processing", since the position of the package is estimated based on the color image, the estimated position of the package cannot be updated earlier than a frequency at which is the color image is acquired. On the other hand, the package on the conveyance conveyor 50 continues to move until the next color image is acquired after the color image is acquired at a certain timing. As a result, even if the projector 40 attempts to project the projection image following movement of the package, the projection image appears to be suddenly moved and projected after being stopped for a certain period (a period until the position of the package is updated by the "package tracking processing") from a viewpoint of the worker.

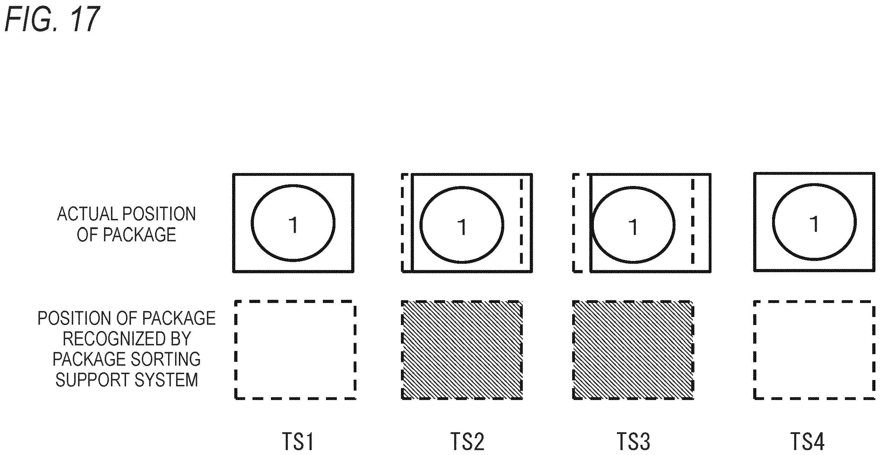

FIG. 17 is a view schematically showing this problem. FIG. 17 is an explanatory view of an example of a projection position onto a package. In FIG. 17, a solid line in an upper part indicates an actual position of the package, and broken lines in the upper part and a lower part indicate a position of the package recognized by the package sorting system 100 by the "package tracking processing". Time points TS1 to TS4 are time stamps indicating time points.

FIG. 17 shows a transition in a case where it is assumed that processing of projecting the package is executed every time point when a cycle of tracking the package is every three time points. That is, at the time point TS2 and the time point TS3, a position of the package is not updated (shown by oblique lines in the lower part in FIG. 17), while the package moves from time to time and a projection image is projected at each time point. As a result, as shown in the upper part of FIG. 17, at the time point TS2 and the time point TS3, a position where the projection image is projected is shifted from the actual position of the package. Then, when a position of the package is updated at the time point TS4, the position where the projection image is projected suddenly moves.

In order to solve this problem and to smoothly move the projection image following the movement of the package, the position of the package is predicted (forecasted) in the present embodiment. Hereinafter, details of forecast will be described based on a flow of the processing shown on the right side (steps S110 to S150) of FIG. 16B.

The processor 34 reads the ID of each package recorded in the memory 36, and determines an image to be projected onto each package using the ID (S110). For example, for a package to which a normal ID is assigned, an image indicating a sorting destination corresponding to the ID is determined as the image to be projected, and for a package to which an ID indicating an occurrence of an error is assigned, an error image is determined as the image to be projected. At this stage, it may not be determined at which position the determined image is to be projected.

Subsequently, the processor 34 reads the time point, at which the color image is acquired, recorded in the memory 36 (S120).

The processor 34 estimates a movement distance D of each package using the time point at which the color image is acquired (S130). Details of this processing will be described later.

The processor 34 corrects the position of each package by adding the estimated movement distance D to the position of each package recorded in the memory in step S40 (S140).

Then, the processor 34 generates a projection image and instructs the projection image to be projected onto the corrected position (S150). Projection may be instructed in a form of providing the image itself to be projected by the projector. In this case, it is conceivable to provide an image in which a projection image to be projected onto each package is included in a portion corresponding to a position of each package after correction in a projectable range of the projector, and the other portion is blackened.

Details of processing of estimating the movement distance D of each package shown in step S130 are as follows. For example, when a movement speed of the package (the conveyance speed of the conveyance conveyor 50) is v, the movement distance D by which the package has moved can be calculated by (current time point - time point at which color image is acquired) × v at the previous time. The processor 34 may calculate the movement distance D as a distance with a direction (for example, 2 cm in an east direction), or may calculate the movement distance D as a distance that does not particularly define a direction when a movement direction of the package is substantially the same as the conveyance direction of the conveyance conveyor 50 (that is, in order to calculate the movement distance D as a distance with a direction, v may be determined by a speed with a direction). Hereinafter, unless otherwise distinguished, expressions "distance" and "speed" will be collectively referred to as one "with a direction" and one "without a direction".

In order to enable calculation of the movement distance D described above, it is necessary to determine a value of the speed v by estimation or actual measurement. The following method can be employed in order to determine the value of the speed v.
Method 1) When the package is tracked (step S60), v is calculated based on a movement distance per time unit and a direction.
Method 2) The package is considered to move at a predetermined speed and in a predetermined direction, and the speed is defined as v.
Method 3) A conveyance speed and a direction of the conveyor are monitored based on an output of a motor or the like, and the speed is defined as v (assuming that a speed of the package is equal to the speed of the conveyor).

The value of v may not be calculated by any one of the methods 1) to 3), and may be determined by comprehensively evaluating results calculated by the respective methods. For example, it is conceivable that an average value of the results calculated by the respective methods 1) to 3) is defined as v.

While the speed can be estimated from a beginning of an operation of the package sorting system 100 in the method 2) in which the speed and the direction of the package are considered to be predetermined and the method 3) in which the speed is calculated based on the conveyance speed of the conveyor, the speed cannot be estimated until a certain time elapses in the method 1) in which the speed is calculated based on a tracking result of the package. On the other hand, in the method 1), since an actual movement of the package can be reflected in the speed v regardless of the conveyance direction of the conveyor or the like, a projection position can be corrected to a position following the actual movement even when the package moves in a direction different from the conveyance direction of the conveyor or moves backward in the conveyance direction due to a movement caused by collision between the packages or contact of the worker with the package. Specifically, in the method 1), the projection position can be corrected even if the package moves vertically or obliquely with respect to the conveyance direction of the conveyor or moves backward in the conveyance direction of the conveyor.

In consideration of characteristics of these methods, for example, a method to be used may be switched according to the elapsed time, or a degree of reflection in evaluation may be changed, such as changing a weight of the weighted average. That is, advantages of the methods can be utilized by mainly using the methods 2) and 3) immediately after a start of the package sorting system 100 and mainly using the method 1) when time elapses.

By correcting the position where the projection image is to be projected in this manner, according to the first embodiment, the projector 40 can more accurately project the projection image onto the package along the movement of the package, and projection of the image can be viewed smoothly from human eyes.

D may be calculated by "D = (current time point + Δt - time point at which color image is acquired) × v". Here, Δt can be transmission time of the projection image from the projection instruction device 30 to the projector 40. Alternatively, Δt may be delay time due to processing in the projector. Alternatively, Δt may be time obtained by adding the delay time due to the processing in the projector to the transmission time of the projection image from the projection instruction device 30 to the projector 40. By determining Δt in this manner, the predicted projection position can be calculated more accurately.

In the above description, in the package tracking processing, the position of the package in the color image is estimated by searching for the portion similar to the feature amount of the color of the package from the color image. For example, it is conceivable that a feature amount of a general package is learned in advance by using machine learning, and learning data as a result of the learning is customized by the feature amount of the package actually conveyed and used for position estimation of the package.

Here, the learning for generating the learning data may be performed using one or more statistical classification techniques. Examples of the statistical classification techniques include linear classifiers, support vector machines, quadratic classifiers, kernel estimation, decision trees, artificial neural networks, Bayesian techniques and/or networks, hidden Markov models, binary classifiers, multi-class classifiers, a clustering technique, a random forest technique, a logistic regression technique, a linear regression technique, and a gradient boosting technique. However, the statistical classification techniques to be used are not limited thereto. The learning data may be generated by the processor 34 in the projection instruction device 30, or may be generated in the server 200 communicably connected to the package sorting system 100 using the network NW1, for example. Further, the learning data may be learning data received (acquired) from the server 200 via the network NW1.

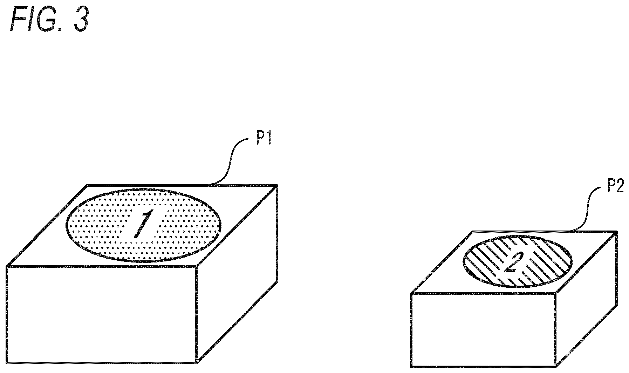

FIG. 3 is a view showing a state in which a projection image including information such as a word and a numeral is projected on an upper surface of a package. When the worker M views the projection image projected on the package P1 and confirms that the package P1 is the package that the worker M is in charge of, the worker M loads the arrived package P1 onto a truck immediately. Therefore, sorting work can be efficiently performed. The same applies to the package P2.

FIG. 4 is a view showing a UI screen 350 displayed on the display unit 312 of the truck transport management device 300. When there is detection that loading onto the truck of the package on which the projection image is projected is completed (for example, an input operation by the worker or determination based on an output of the image sensor 20), the projection instruction device 30 transmits package specifying information including package capacity information detected by the image sensor 20 to the server 200. The server 200 acquires the package specifying information including the package capacity information from the package sorting system 100 via the network NW1, and calculates a current occupied capacity of the truck in real time for each truck having a different delivery destination. The server 200 creates the UI screen 350 indicating a result of calculating a current occupied capacity of a truck for each truck, and transmits the UI screen 350 to the truck transport management device 300 or the warehouse control device 400. When the truck transport management device 300 receives data of the UI screen 350, the truck transport management device 300 displays the UI screen 350 on the display unit 312. When the warehouse control device 400 receives the data of the UI screen 350, the warehouse control device 400 displays the UI screen 350 on the display unit 412.

On the UI screen 350, a truck icon, truck information, a bar display indicating an occupied capacity of a truck, a current package capacity ratio calculated based on a size of the loaded package, and a current package amount ratio calculated based on the number of loaded packages are displayed in a plurality of rows for five trucks, for example. For example, in a case of a first truck in the uppermost row, in addition to a truck icon and truck information, a bar display indicating an occupied capacity of the truck by orange gradation, a package capacity ratio: 31%, and a package amount ratio: 32/100 are shown.

A truck delivery manager or a sorting worker can intuitively grasp a sense of a size of a package loaded on a loading bed of the truck by viewing the UI screen 350. For example, the truck delivery manager or the sorting worker can roughly grasp how many conveyed packages are to be loaded on the current truck and from which package the packages are to be loaded on the next truck, and can improve a work efficiency of his or her own. The truck delivery manager can more accurately plan the number of trucks required for loading the packages, that is, the number of trucks to be arranged, based on the current occupied capacity of the truck. For example, when the number of packages is large, the truck delivery manager can prepare the next truck. On the other hand, when the number of packages is small, the truck delivery manager does not need to prepare a standby truck. Therefore, there is no waste in truck arrangement.

A display device that displays the UI screen indicating the current occupied capacity of the truck is not limited to the display unit 312 of the truck transport management device 300, and may be the display unit 212 of the server 200, a display such as a smartphone or a tablet terminal connectable to the server 200, or a monitor connected to the projection instruction device 30.

Based on a loading status of the truck displayed on the UI screen, the truck delivery manager may perform dynamic pricing (in other words, dynamic increase in a wage to a driver of the truck) such that an income of the driver of the truck who carries a large amount of packages increases dynamically when the number of packages is large. When the number of packages is large, the projection instruction device 30 may insert a message such as "Keep it up" or "You can have a break in two minutes" on a belt conveyor so as not to overlap the package in the projection image projected by the projector 40, and may take measures such as improving a motivation of the sorting worker or changing a mood.

Next, an operation of the projection instruction system 5 according to the first embodiment will be described.

Here, a case where the projection instruction system 5 performs a package sorting operation based on the package specifying information will be described. A change in the package specifying information including sorting information conceptually includes an addition, a change, and a deletion.

### [First Utilization Example of Projection Instruction System]

### (Normal Package Sorting)

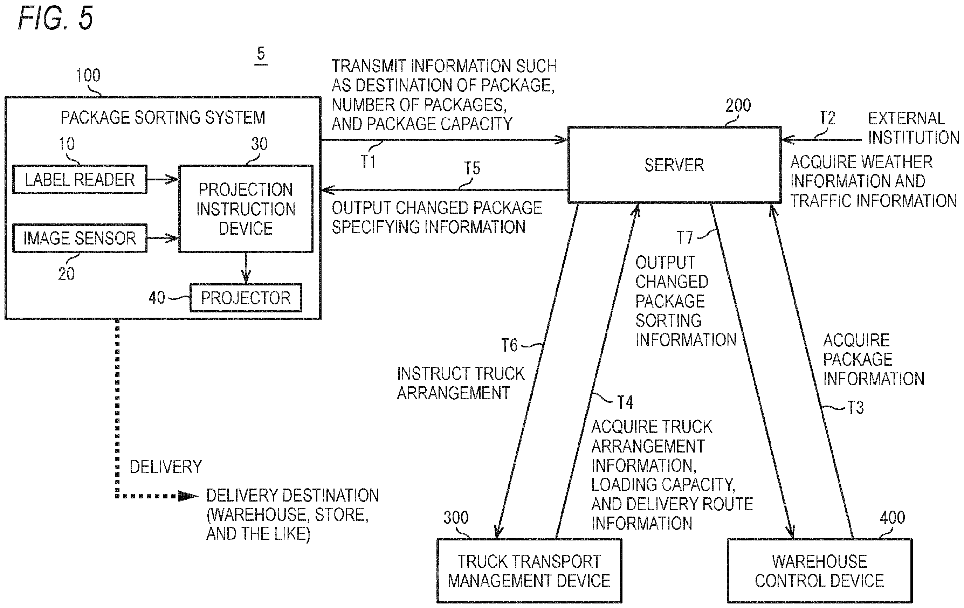

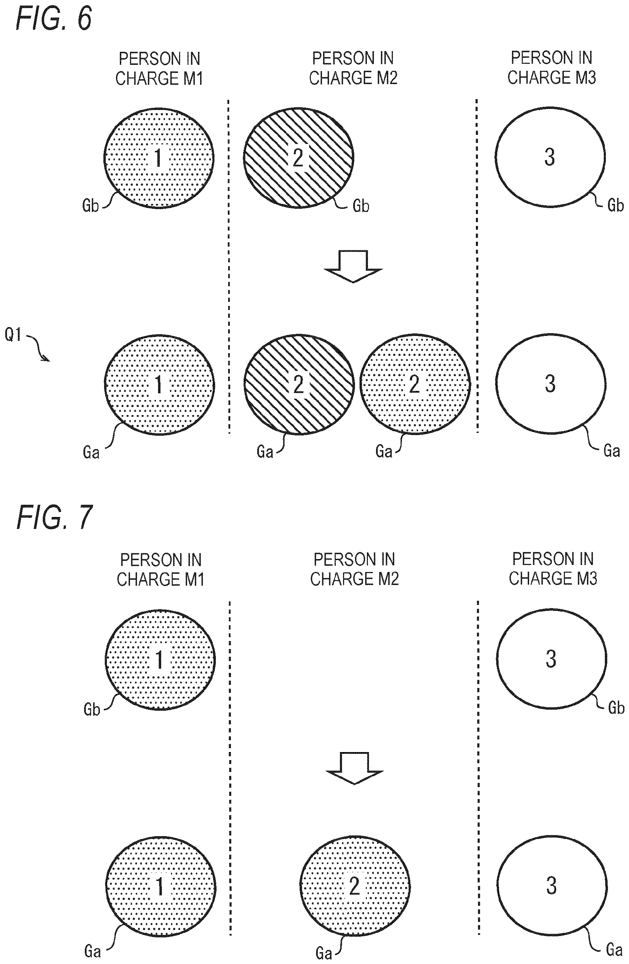

Fig. 5 is a diagram showing a procedure of a package sorting operation in the projection instruction system 5. In normal package sorting, in principle, a different person in charge sorts packages for each destination. Each person in charge determines a destination of a package based on a projection image projected on an upper surface of the package. The projection image is a circular image projected on the upper surface of the package. The circular image is filled with a different color for each destination. A person in charge number for identifying the person in charge is described in a center of the circular image. In the present embodiment, when colors of the circular images are "blue", "green", and "yellow", it indicates that destinations are "Tokyo", "Osaka", and "Hokkaido", respectively. In addition, when the person in charge numbers are "1", "2", and "3", the person in charge numbers indicate a person in charge M1 that sorts packages going to Tokyo, a person in charge M2 that sorts packages going to Osaka, and a person in charge M3 that sorts packages going to Hokkaido, respectively (see Fig. 6). The colors of the circular images may indicate each person in charge, and the numbers may indicate the destinations. When sorting destinations do not need to be distinguished from each other, the person in charge of sorting is simply referred to as the worker M. Although the circular image is illustrated as an example of the projection image, the projection image does not necessarily have to be circular, and may have any shape such as a quadrangular shape or a polygonal shape.

The projection instruction device 30 reads a label attached to a package conveyed by conveyance conveyor by the label reader 10, and acquires package specifying information including information such as a destination of the package. The projection instruction device 30 captures an image of the package conveyed by the conveyance conveyor by the image sensor 20, and acquires information such as the number of packages and a package capacity. The projection instruction device 30 transmits information such as the destination of the package, the number of packages, and the package capacity to the server 200 connected to the network NW1 by the communication circuit 39 (T1).

The processor 210 of the server 200 registers, in the memory 211, information indicating that the person in charge M1 sorts packages going to Tokyo, the person in charge M2 sorts packages going to Osaka, and the person in charge M3 sorts packages going to Hokkaido, as person in charge information for sorting normal packages. The package sorting system 100 may register, in the memory, the person in charge information for sorting normal packages.

On the other hand, the processor 210 of the server 200 periodically acquires weather information and traffic information from the external institution as external information (T2). For example, when a typhoon is predicted to come to Tokyo in the weather information, a status occurs in which packages going to Tokyo is desired to be quickly sorted. The traffic information includes traffic jam information.

The processor 210 of the server 200 acquires package information from the warehouse control device 400 via the network NW3 (T3). For example, when the number of packages going to Tokyo tomorrow is large or the number of packages going to Tokyo for one hour from now on is large, a status in which it is desired to quickly sort packages going to Tokyo occurs in the same manner.

The processor 210 of the server 200 acquires truck arrangement information, a loading capacity of a scheduled truck, and delivery route information from the truck transport management device 300 via the network NW2 (T4).

The processor 210 of the server 200 determines a change in sorting work for the worker based on the information such as the destination of the package, the number of packages, and the package capacity received from the projection instruction device 30 in the procedure T1. The processor 210 outputs the package specifying information including the changed sorting information to the package sorting system 100. In the changed package specifying information, for example, in order to quickly sort the packages going to Tokyo, the processor 210 instructs the package sorting system 100 via the network NW1, for the person in charge M2 of sorting the packages going to Osaka, to sort the packages going to Tokyo in addition to the packages going to Osaka (T5).

When the projection instruction device 30 of the package sorting system 100 receives the instruction via the communication circuit 39, the projection instruction device 30 instructs the projector 40 to project a projection image such that the person in charge M1 sorts the packages going to Tokyo, the person in charge M2 sorts the packages going to Osaka and the packages going to Tokyo, and the person in charge M3 sorts the packages going to Hokkaido, as the package specifying information including the changed sorting information.

Fig. 6 is a view showing an example of a projection pattern Q1 projected on an upper surface of a package. In normal package sorting, the sorting of the packages to delivery destinations tends to be biased from prediction of the next day or real-time information. For example, when the number of packages going to Tokyo to be sorted by the person in charge M1 is large, the person in charge M2 in charge of the packages going to Osaka can give a hand. In the projection pattern Q1, the projector 40 projects a projection image including help on the upper surface of the package so that the person in charge M2 in charge of the packages going to Osaka sorts the packages going to Tokyo.

Here, in the package specifying information including the unchanged sorting information, the projector 40 projects a projection image Gb, which is a circular image colored in blue (indicated by dots in the drawing) and having the person in charge number "1", on a package going to Tokyo that is first conveyed by the conveyance conveyor. The projector 40 projects the projection image Gb, which is a circular image colored in green (indicated by hatching in the drawing) and having the person in charge number "2", on a package going to Osaka that is second conveyed by the conveyance conveyor. The projector 40 projects the projection image Gb, which is a circular image colored in yellow (indicated in white in the drawing) and having the person in charge number "3", on a package going to Hokkaido that is third conveyed by the conveyance conveyor.

In the package specifying information including the changed sorting information, the projector 40 projects a projection image Ga, which is a circular image colored in blue and having the person in charge number "1", on a package going to Tokyo that is first conveyed by the conveyance conveyor. The projector 40 projects the projection images Ga, which is a circular image colored in green and having the person in charge number "2", on a package going to Osaka that is second conveyed by the conveyance conveyor. Further, the projector 40 projects the projection image Ga, which is a circular image colored in blue and having the person in charge number "2", on a package going to Tokyo that is third conveyed by the conveyance conveyor. This makes the person in charge M2 having the person in charge number "2", who normally sorts the packages going to Osaka, to sort both the packages going to Tokyo and the packages going to Osaka. Here, the projection image Ga, which is the circular image colored in blue and having the person in charge number "2", is projected as a help screen for the person in charge of sorting the package going to Osaka to help sort the package going Tokyo, but the projection image Ga may be a projection image that blinks in blue instead of colored in blue. The projector 40 projects the projection image Ga, which is a circular image colored in yellow and having the person in charge number "3", on a package going to Hokkaido that is fourth conveyed by the conveyance conveyor.

The processor 210 of the server 200 instructs the truck transport management device 300 to arrange trucks via the network NW2 according to the package specifying information including the changed sorting information (T6). When the instruction is received, the truck transport management device 300 displays truck arrangement information on the display unit 312 and instructs truck delivery.

The processor 210 of the server 200 outputs the changed sorting information to the warehouse control device 400 via the network NW3 (T7). The warehouse control device 400 displays the changed sorting information on the display unit 412.

As described above, in the projection instruction system 5, when the projection image including the sorting information is projected on the upper surface of the package, the person in charge of sorting is represented by the number superimposed on the projected circular image, and the sorting destination is represented by the color of the circular image. This enables the worker in charge of sorting to easily recognize the person in charge of the package to be sorted and the delivery destination. When a sorting amount of packages to a sorting destination of specific packages is large, the projection instruction device can assign a worker who sorts packages to another sorting destination to sort the specific packages and instruct the worker to support a worker who sorts the specific packages. Therefore, the projection instruction device can uniformize work of workers in charge of sorting. In addition, a delay in sorting of packages to a specific sorting destination is prevented.

Here, in order to sort packages going to Tokyo urgently, the package sorting system 100 instructs, via the network NW1, a person in charge M2 who performs sorting of packages going to Osaka to sort the packages going to Tokyo in addition to the packages going to Osaka, but the person in charge M2 may be a second person who is dedicated to sorting of the packages going to Tokyo. In this case, the packages to be sorted by the person in charge M2 are only going to Tokyo, and the person in charge M2 shares and sorts the packages going to Tokyo with a person in charge M1. The packages going to Osaka is sorted by another person in charge. In this case, the person in charge M2 does not change any operation of himself or herself and does not know that he or she is also sorting the packages going to the Tokyo, and thus it is possible to reduce complexity of the sorting by the person in charge.

Fig. 7 is a view showing another example of a projection pattern projected on an upper surface of a package. When a large number of packages going to Tokyo are to be sorted, the processor 210 of the server 200 may assign a free person in charge M2 to the package sorting system 100 so as to temporarily sort packages going to Tokyo. In this case, the projection instruction device 30 instructs the projector 40 to project a circular image colored in blue and having the person in charge number "2" on an upper surface of a package. Accordingly, the number of persons in charge of sorting packages going to Tokyo is increased by one, and work of sorting the packages going to Tokyo is promoted.

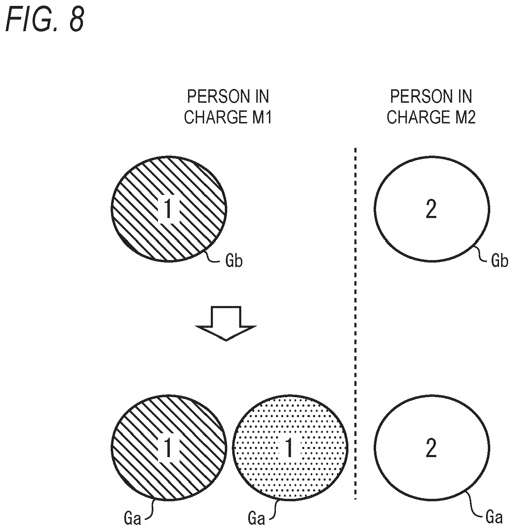

Fig. 8 is a view showing still another example of a projection pattern projected on an upper surface of a package. In a status in which there are the person in charge M1 who sorts packages going to Osaka and the person in charge M2 who sorts packages going to Hokkaido, when the packages going to Tokyo are sorted, the processor 210 of the server 200 may assign the packages going to Tokyo to the person in charge M1 who sorts the packages going to Osaka if the number of packages going to Osaka is small. In this case, the projection instruction device 30 instructs the projector 40 to project a circular image colored in green and having the person in charge number "1" on an upper surface of a package going to Osaka, and project a circular image colored in blue and having the person in charge number "1" on an upper surface of a package going to Tokyo. This enables one person in charge to sort both the packages going to Osaka and the packages going to Tokyo.

### (Urgent Package Sorting)

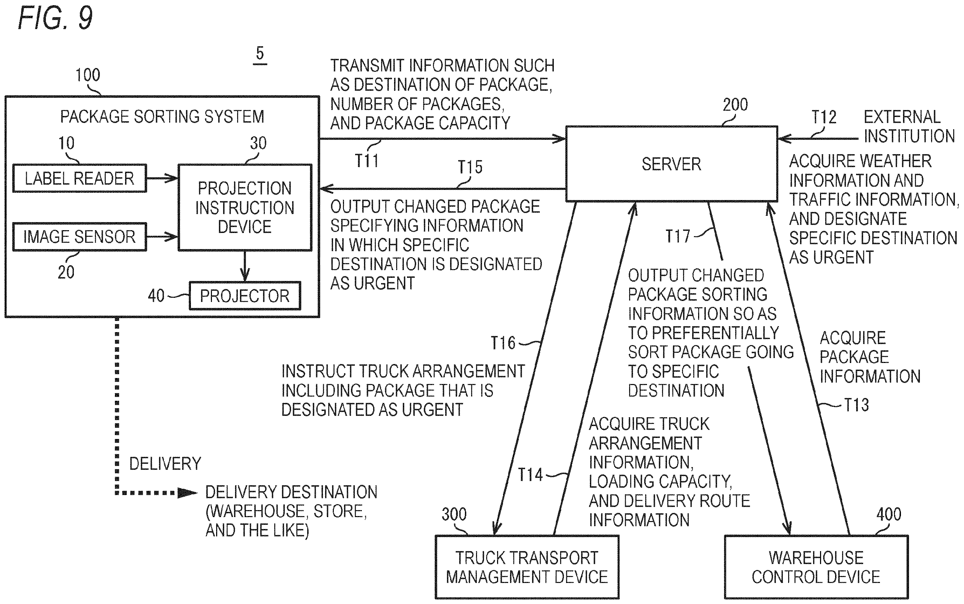

Fig. 9 is a diagram showing a procedure of an operation of sorting urgent packages in the projection instruction system 5. The projection instruction device 30 of the package sorting system 100 reads a label attached to a package conveyed by conveyance conveyor by the label reader 10, and acquires a package amount, a loading rate, and package handling information for each destination (T11). The projection instruction device 30 transmits the acquired information to the server 200 connected to the network NW1 by the communication circuit 39.

The processor 210 of the server 200 periodically acquires weather information and traffic information from the external institution as external information. For example, when a typhoon is predicted to come to Hokkaido in the weather information, a status occurs in which packages going to Hokkaido is desired to be quickly sorted. The processor 210 designates a package going to a specific destination (here, Hokkaido) as urgent (T12). Examples of a case of urgent designation include a case where an event is held in vicinity of a delivery route and traffic jam is predicted, in addition to a case where the typhoon is approaching according to the weather information.

The processor 210 of the server 200 acquires package information from the warehouse control device 400 via the network NW3 (T13). For example, the processor 210 acquires a sorting amount, the number of current or daily packages, and worker information as the package information. The worker information includes the number of workers and proficiency thereof.

The processor 210 of the server 200 acquires truck arrangement information, a loading capacity of a scheduled truck, and delivery route information from the truck transport management device 300 via the network NW2 (T14).

The processor 210 of the server 200 instructs the package sorting system 100 to perform urgent designation on the package going to Hokkaido as the changed sorting information based on information on urgent designation in the procedure T12 (T15).

When the projection instruction device 30 of the package sorting system 100 receives the instruction via the communication circuit 39, the projection instruction device 30 instructs the projector 40 to perform urgent designation on the package going to Hokkaido and project a projection image such that the person in charge M1 sorts the packages going to Tokyo, the person in charge M2 sorts the packages going to Osaka, and the person in charge M3 sorts the packages going to Hokkaido, as the changed sorting information.

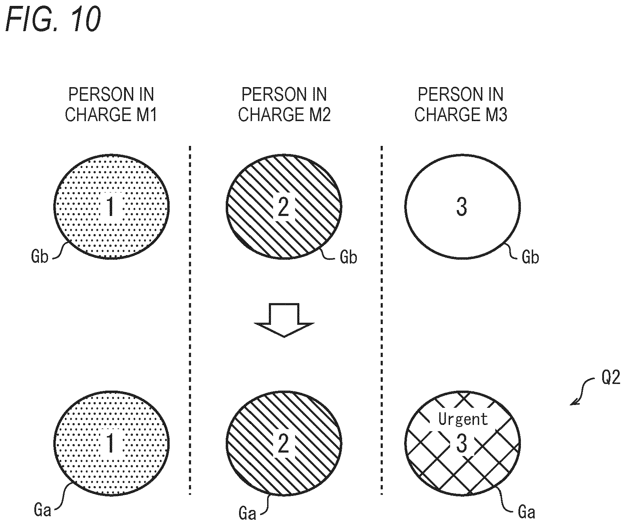

FIG. 10 is a view showing a projection pattern Q2 projected on an upper surface of an urgent package. In the projection pattern Q2, the projector 40 projects a projection image Ga, which is a circular image painted in blue and having a person in charge number "1", onto a package going to Tokyo that is first conveyed by the conveyance conveyor. The projector 40 projects the projection image Ga, which is a circular image painted in green and having a person in charge number "2", onto a package going to Osaka that is second conveyed by the conveyance conveyor. In a normal case, the projector 40 projects a projection image Gb, which is a circular image painted in yellow and having a person in charge number "3", onto a package going to Hokkaido that is third conveyed by the conveyance conveyor. However, in a case of urgent designation, the projector 40 projects the projection image Ga, which is a circular image painted in red (indicated by crosses in the drawing) and having a word "Urgent" and the person in charge number "3". A person in charge M3 who sorts packages going to Hokkaido can quickly cope with urgent sorting by visually recognizing the projection image Ga, which is an unusually conspicuous circular image painted in red and having the word "Urgent", projected on an upper surface of a package. In FIG. 10, the numeral "3" and the word "Urgent" are radiated, but only the word "Urgent" may be radiated. In this case, by determining a person in charge corresponding to the package irradiated with the word "Urgent" in advance, the package will be appropriately processed. By determining in advance a correspondence to the package irradiated with the word "Urgent", any person in charge can cope with the package.

The processor 210 of the server 200 instructs the truck transport management device 300 to arrange trucks via the network NW2 according to the changed sorting information including information of the package that is designated as urgent (T16). When the instruction is received, the truck transport management device 300 displays truck arrangement information on the display unit 312 and instructs truck delivery.

The processor 210 of the server 200 outputs the changed sorting information, which is changed to preferentially sort packages going to Hokkaido, to the warehouse control device 400 via the network NW3 (T17). The warehouse control device 400 displays the changed sorting information on the display unit 412.

As described above, in the projection instruction system 5, the projection instruction device can instruct to prioritize a task for a sorting destination that needs to be urgent.

### (Package Sorting in Consideration of Truck Arrangement)

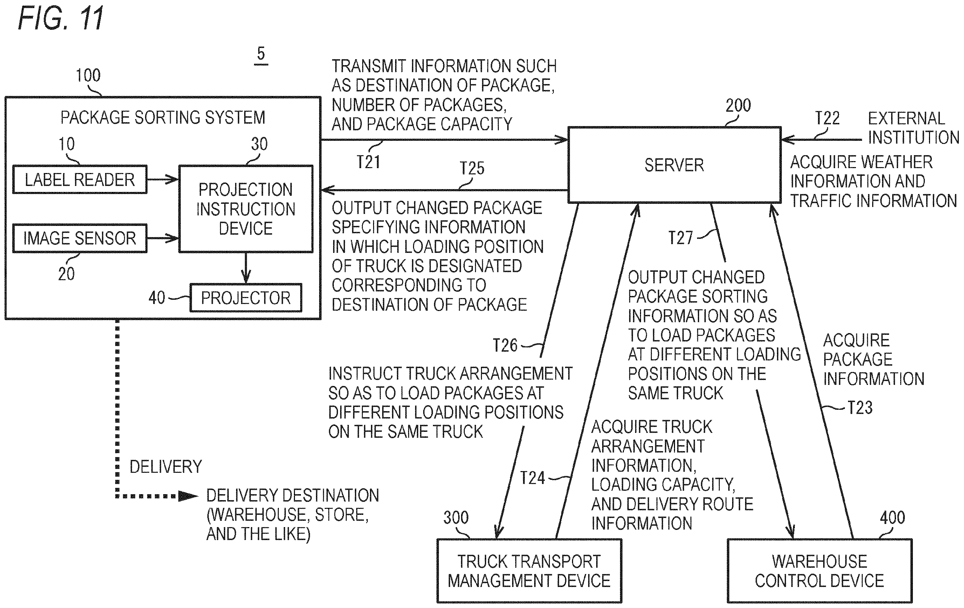

Fig. 11 is a diagram showing a procedure of a package sorting operation in consideration of truck arrangement in the projection instruction system 5. The projection instruction device 30 of the package sorting system 100 reads a label attached to a package conveyed by the conveyance conveyor by the label reader 10, and acquires a package amount, a loading rate, and package handling information for each destination (T21). The projection instruction device 30 transmits the acquired information to the server 200 connected to the network NW1 by the communication circuit 39.

The processor 210 of the server 200 periodically acquires weather information and traffic information from the external institution as external information (T22).

The processor 210 of the server 200 acquires package information from the warehouse control device 400 via the network NW3 (T23). For example, the processor 210 acquires a sorting amount, the number of current or daily packages, and worker information as the package information. The worker information includes the number of workers and proficiency thereof.

The processor 210 of the server 200 acquires truck arrangement information, a loading capacity of a scheduled truck, and delivery route information from the truck transport management device 300 via the network NW2 (T24).

The processor 210 of the server 200 instructs the package sorting system 100 to designate a loading position to a loading bed of a truck corresponding to a destination of a package as package specifying information including the changed sorting information based on the truck arrangement information, the loading capacity of the scheduled truck, and the delivery route information acquired in the procedure T24 (T25). For example, when a delivery route of the truck is a departure point: Osaka, a stopover point: Yokohama, and an arrival point: Tokyo, the processor 210 designates a loading position of a package going to Tokyo in the back of the loading bed of the truck, and designates a loading position of a package going to Yokohama in the front thereof.

When the projection instruction device 30 of the package sorting system 100 receives the instruction via the communication circuit 39, the projection instruction device 30 instructs the projector 40 to project, as the changed sorting information, a projection image that is a circular image in which the loading position of the package going to Yokohama is designated in the front and a projection image that is a circular image in which the loading position of the package going to Tokyo is designated in the back.

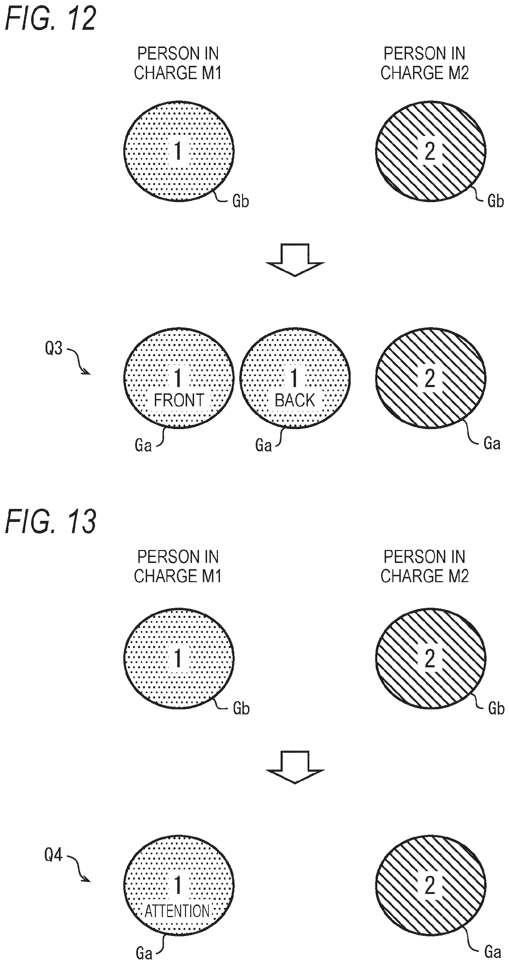

Fig. 12 is a view showing a projection pattern Q3 projected on an upper surface of a package whose loading position is designated. In the projection pattern Q3, the projector 40 projects a projection image, which is a circular image colored in blue and having a word "Front" and the person in charge number "1", on a package going to Yokohama that is first conveyed by the conveyance conveyor. The word "Front" indicates that a loading position of the package is in the front of a loading bed. In addition, the projector 40 projects a projection image, which is a circular image colored in blue and having a word "Back" and the person in charge number "1", on a package going to Tokyo that is second conveyed by the conveyance conveyor. The projector 40 projects a projection image, which is a circular image colored in green and having the person in charge number "2", on a package going to Osaka that is third conveyed by the conveyance conveyor. Here, the loading position of the package to the loading bed of the truck is represented by simple words of "Front" and "Back", but may be represented by an illustration (an illustration representing a front side, an illustration representing a back side), a color, a font, or the like.

The processor 210 of the server 200 instructs the truck transport management device 300 to arrange trucks so as to load packages at different loading positions on the same truck via the network NW2 according to the changed sorting information including information of the package whose loading position is designated (T26). When the instruction is received, the truck transport management device 300 displays truck arrangement information on the display unit 312 and instructs truck delivery.

The processor 210 of the server 200 outputs the changed sorting information to the warehouse control device 400 via the network NW3 so as to load the packages at different loading positions on the same truck (T27). The warehouse control device 400 displays the changed sorting information on the display unit 412.

As described above, in the package sorting system 100, for example, a case is assumed where packages are loaded on a truck going to Tokyo whose departure point is Osaka, stopover point is Yokohama, and arrival point is Tokyo. The projection instruction device instructs to project, on an upper surface of a package going to Yokohama, a projection image having a word "Front" that prompts the package to be placed in the front of a loading bed of the truck. In addition, the projection instruction device instructs to project, on an upper surface of a package, a projection image having a word "Back" that prompts the package to be placed in the back of the loading bed of the truck. A worker who sorts packages loads the package on which the projection image having the word "Front" is projected in the front of the loading bed of the truck. In addition, the worker loads the package on which the projection image having the word "Back" is projected in the back of the loading bed of the truck. Accordingly, in a case where a departure point, a stopover point, and an arrival point are set as a delivery route, work efficiency of loading and unloading is improved when a driver who delivers by the truck unloads the package at each point.

Although here has described a case where, from a very beginning, the truck is determined to go to Tokyo, in which a departure point is Osaka, a stopover point is Yokohama, and an arrival point is Tokyo, a route of the truck may be dynamically changed. For example, it is assumed that the departure point is Osaka and the arrival point is Yokohama until the truck arrives at the departure point, Osaka. However, in the time after arriving at the departure point, Osaka, and before loading new packages, the route may be changed, based on information such as an amount of packages, into a route where the departure point is Osaka, the stopover point is Yokohama, and the arrival point is Tokyo. In such a case, display of "front" and "back" is particularly convenient. Until now, sorting work could not be flexibly applied to such a route change of the truck, but this makes it possible.

### (Package Sorting in Consideration of Package Handling Information)

In the projection instruction system 5, the label reader 10 of the package sorting system 100 reads a label attached to a package, and transmits a package amount, a loading rate, and package handling information for each destination read by the projection instruction device 30 to the server 200. The processor 210 of the server 200 changes package specifying information including sorting information in consideration of package handling based on the package handling information acquired from the package sorting system 100. The processor 210 transmits the package specifying information including the changed sorting information to the projection instruction device 30. The projection instruction device 30 instructs the projector 40 to project a projection image in consideration of the package handling information on the package based on the changed sorting information.

The processor 210 of the server 200 may acquire the package handling information from the warehouse control device 400, the truck transport management device 300, or the like.

Fig. 13 is a view showing a projection pattern Q4 projected on an upper surface of a package in consideration of package handling information. In the projection pattern Q4, the projector 40 projects the projection image Ga, which is a circular image colored in blue and having a word "Attention" and the person in charge number "1", on a package going to Tokyo that is first conveyed by the conveyance conveyor. The word "Attention" indicates that attention is required for package sorting. The projector 40, as usual, projects the projection image Ga, which is a circular image colored in green and having the person in charge number "2", on a package going to Osaka that is second conveyed by the conveyance conveyor. Here, the word "Attention" is projected as a part of the circular image, but other words such as "Handle carefully" and "Fragile item", and an illustration or a symbol calling attention may be projected as package handling information. The package handling information may be expressed by blinking the circular image.

As described above, in the projection instruction system, the projection instruction device can call attention to a package that needs to be particularly carefully sorted, such as a package of a very important person (VIP) or a package in which a fragile item is packaged.

### (Sorting of Packages When Loading on Next Truck)

In the projection instruction system 5, the processor 210 of the server 200 changes sorting information based on a loading capacity of a truck and truck arrangement information received from the truck transport management device 300 such that a package to be delivered is loaded on a loading bed of a next truck. The processor 210 transmits package specifying information including the changed sorting information to the projection instruction device 30. The projection instruction device 30 instructs the projector 40 to project, on the package, a projection image instructing to be loaded on the next truck based on the package specifying information including the changed sorting information.

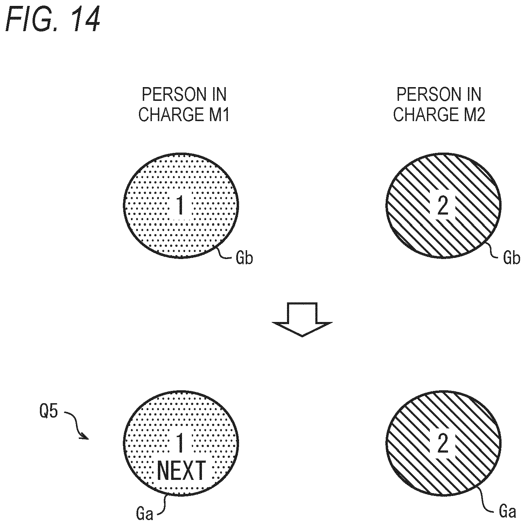

Fig. 14 is a view showing a projection pattern Q5 projected on an upper surface of a package when the package is loaded on a next truck. In the projection pattern Q5, the projector 40 projects the projection image Ga, which is a circular image colored in blue and having a word "NEXT" and the person in charge number "1", on a package going to Tokyo conveyed by the conveyance conveyor. The word "NEXT" indicates a current truck is full and the package is prompted to be loaded on the next truck.

The projector 40 projects the projection image Ga, which is a circular image colored in green and having the person in charge number "2" as usual, on a package going to Osaka that is second conveyed by the conveyance conveyor. Here, the word "NEXT" is projected as a part of the circular image, but other words such as "Next truck from here" or "Truck change", or an illustration or a symbol representing next truck information may be projected as the next truck information. The next truck information may be expressed by blinking the circular image. In this case, by making a blinking pattern of the circular image different from a blinking pattern of the package handling information, the worker in charge of sorting can easily recognize the next truck information.

As described above, in the package sorting system 100, the projection instruction device can instruct the worker in real time to load the package to be sorted to the next truck when the currently loaded truck is full. Therefore, the worker can sort the package by easily recognizing that the package is to be loaded on the next truck. This improves efficiency of the sorting work.

### (Projection onto Gap between Packages Conveyed by Conveyance Conveyor)

The package sorting system 100 can also provide information by projecting a projection image onto a gap between packages conveyed by the conveyance conveyor. The projected projection image may be projected onto a gap between a plurality of packages so as not to cover the plurality of packages based on positions of the plurality of packages on the conveyance conveyor acquired by the image sensor 20, for example. The processor 210 of the server 200 transmits, for example, information such as a stop of the conveyance conveyor and a message to the worker to the projection instruction device 30. The projection instruction device 30 instructs the projector 40 to project the projection image including the information (provided information). The projector 40 projects the projection image including the provided information onto the gap between the packages so as not to cover the packages. A projection position or a projection timing is determined by the projection instruction device 30 instructing the projector 40. The projector 40 may project the projection image at a predetermined projection position or at a predetermined timing.

Here, when the provided information is information indicating the stop of the conveyance conveyor, the package sorting system 100 can alert the worker that the conveyance conveyor will stop soon before the conveyance conveyor stops. When the provided information is the message to the worker, examples of the message to the worker include notifying the worker of a sorting score (worker score) and a sorting level. Examples of the message for encouraging the worker include messages such as "Hello", "Thanks", "Good morning", "Well done", "Excellent", and "Thank you". As mental preparation, notification of going to be busy may include a message such as "An amount of packages going to Tokyo will increase for a period about ten minutes after three minutes", "You will be busy in a few minutes", or the like. These messages to the worker may be generated, for example, when the package is "Urgent", or may be automatically generated by the processor 210 of the server 200 based on the acquired weather information or traffic information.

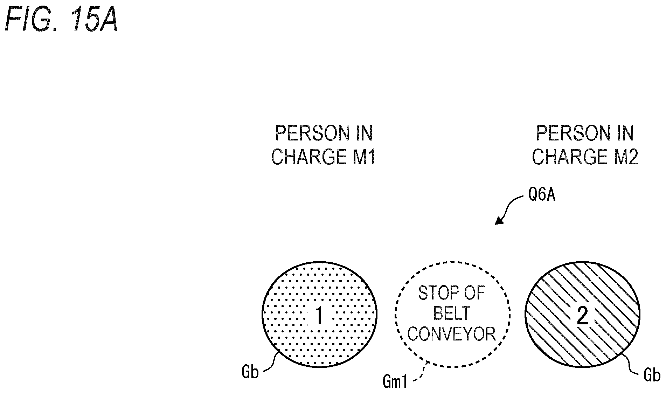

FIG. 15A is a view showing a projection pattern Q6A in which a projection image Gm1 including provided information is projected in a gap between packages conveyed by the conveyance conveyor separately from the projection image Ga that is a circular image. FIG. 15B is a view showing a projection pattern Q6B in which a projection image Gm2 including provided information is projected in a gap between packages conveyed by the conveyance conveyor separately from the projection image Ga that is a circular image. In the projection pattern Q6A, the projector 40 projects projection images Gm1 including a message of "Stop of belt conveyor" as an alert onto the gap between a package going to Tokyo conveyed by the conveyance conveyor and a package going to Osaka conveyed next by the conveyance conveyor. In the projection pattern Q6B, for example, in a time zone in the morning, the projector 40 projects the projection image Gm2 including a message of "Nice weather today" as a message to the worker onto the gap between a package going to Tokyo conveyed by the conveyance conveyor and a package going to Osaka conveyed next by the conveyance conveyor.

Here, the projection images Gm1, Gm2 including words serving as the provided information are projected in the gap between the packages, but the projection images Gm1, Gm2 may be projected on a surface of the conveyance conveyor, a periphery of the conveyance conveyor, or the like where the package is not placed. The projection images Gm1, Gm2 are not limited to words, and may be illustrations, symbols, or the like representing provided information.

As described above, in the projection instruction system 5, the projection instruction device can project, separately from the projection image Ga including the package sorting information, the projection images Gm1, Gm2 including a message such as "Come on" or "One hour left before finishing" that does not directly relate to the package sorting and can increase the motivation of the worker.

In a projection pattern in which the projection images Gm1, Gm2 are projected onto the gap between the packages, the projection images Gm1, Gm2 may be projected onto an area that does not cover the packages, such as a gap between a front side of a package and a rear side of a package that are designated as urgent, when the projection image Ga painted in red and having the word "Urgent" is projected on a package that is designated as urgent. In this case, information such as a reason for urgent designation can be included in the projection images Gm1, Gm2.

Information such as the message included in the projection image Gm2 described above may be stored in the memory 36 of the projection instruction device 30 or the memory 211 of the server 200 as a message table TBGm. The projection image Gm2 may be generated by the processor 34 according to an information type such as traffic information and weather information acquired from the server 200, and a state thereof. The projection image Gm2 may be generated and acquired by the server 200 via the network NW1. As the projection image Gm2, an image to be provided to the worker is generated according to the acquired information and the state of the information type. The projection image Gm2 may be generated by learning data generated by machine learning.

For example, when the information type is "traffic information" and a state of the "traffic information" is "traffic jam", the processor 34 generates a projection image of "It looks like there is a traffic jam" as a notification message of the traffic information to the worker, and projects the projection image between the packages. The projection image may be generated corresponding to a route along which the package is delivered. For example, when a truck is arranged based on a direction for passing through a route included in the traffic information acquired from the server 200 or included in the traffic information, the processor 34 specifies a worker who sorts packages to be delivered by the truck. The processor 34 projects an image including information such as "It looks like there is a traffic jam" or "The truck may be delayed" as a projection image for notifying the specified worker that arrangement (arrival) of the truck may be delayed. Accordingly, the worker can know arrangement information on the truck and the like.

For example, when the information type is "weather information" and a state of the "weather information" is "sunny", the processor 34 generates a projection image of "Nice weather today" as a message to the worker, and projects a projection image between the packages.

As described above, the projection image is generated for each worker according to the acquired information type and the state thereof. Here, the information type is not limited to traffic information and weather information. In addition, it is needless to say that the state of the information type is not limited to traffic jam or sunny.

As described above, in the projection instruction system 5 according to the first embodiment, the projection instruction device 30 instructs projector 40 (an example of an image projection device) to project a projection image on a package. The projection instruction device 30 includes the processor 34, the memory 36 that stores package specifying information for identifying each of a plurality of packages to be delivered, and the communication circuit 39 that communicates with the server 200. The processor 34 cooperates with the memory 36 to generate the projection image Gb (an example of a first projection image) indicating sorting of the corresponding package based on the package specifying information for each package stored in the memory 36, and instructs the projector 40 to project the projection image Gb. When an external instruction including a change in the package specifying information is received from the server 200, the processor 34 generates the projection image Ga (an example of a second projection image) indicating sorting of the corresponding package based on the changed package specifying information, and instructs the projector 40 to project the projection image Ga.

Accordingly, even when there is an external instruction such as an addition, a change, or a deletion of information on the package to be sorted, the projection instruction device 30 can adaptively support efficiency improvement of package sorting work and delivery, and contribute to efficiency improvement of package distribution.

The server 200 acquires package information from the warehouse control device 400. The package information includes, for example, a sorting amount, the number of current or daily packages (an example of a sorting number), and worker information. The processor 34 generates an image indicating help for sorting to a specific sorting destination as a part of the projection image Ga when it is determined that a sorting amount of packages to the specific sorting destination exceeds a sorting upper limit value of one worker based on the package specifying information including the changed sorting information transmitted from the server 200 that has acquired the information on the sorting amount and a sorting number of workers. For example, the processor 34 generates the projection image Ga, which is a circular image colored in blue and having the person in charge number "2" representing a person in charge who sorts packages going to Osaka, on a package going to Tokyo that is conveyed by the conveyance conveyor. Accordingly, when a sorting amount of packages to a sorting destination of specific packages is large, the projection instruction device 30 can assign a worker who sorts packages to another sorting destination to sort the specific packages and instruct the worker to support a worker who sorts the specific packages. Therefore, the projection instruction device 30 can uniformize work of workers in charge of sorting. In addition, a delay in sorting of packages to a specific sorting destination is prevented.

The server 200 acquires weather information (an example of weather forecast information) or traffic information from the external institution. When it is determined that a delivery time point of the package to the specific sorting destination is earlier than an originally scheduled time point based on the package specifying information including the changed sorting information transmitted from the server 200 that has acquired the weather information or the traffic information, the processor 34 generates an image indicating that the package to be sorted to the specific sorting destination is to be delivered urgently as a part of the projection image Ga. For example, in a case of emergency designation, the processor 34 generates the projection image Ga that is a circular image colored in red and having a word "Urgent" and the person in charge number "3". This enables the projection instruction device 30 to instruct to prioritize a task for a sorting destination that needs to be urgent.

The server 200 acquires information indicating that attention is required for handling of a specific package. When it is determined that attention is required for the handling of the specific package based on the package specifying information including the changed sorting information transmitted from the server 200 that has acquired the information indicating that attention is required for the handling of the specific package, the processor 34 generates an image indicating that attention is required for sorting of the specific package as a part of the projection image Ga. For example, the processor 34 generates the projection image Ga, which is a circular image colored in blue and having a word "Attention" and the person in charge number "1", on a package going to Tokyo. Accordingly, the projection instruction device 30 can call attention to a package that needs to be particularly carefully sorted, such as a package of a very important person or a package in which a fragile object is packaged.

The server 200 acquires information on a current loading amount of packages on a specific truck (an example of a delivery vehicle). When it is determined that loading onto the truck is impossible based on the changed sorting information transmitted from the server 200 that has acquired information on the current loading amount of the packages on the truck, the processor 34 generates an image indicating that the next and subsequent packages following the package sorted immediately before are to be sorted to another truck as a part of the projection image Ga. For example, the processor 34 generates the projection image Ga, which is a circular image colored in blue and having a word "NEXT" and the person in charge number "1", on a package going to Tokyo. This enables the projection instruction device 30 to instruct the worker in real time that the truck on which loading is currently performed is fully loaded and packages to be sorted are to be loaded on the next truck. Therefore, the worker can sort the package by recognizing in advance that the package is to be loaded on the next truck. The efficiency of the sorting work is improved.

The projection instruction device 30 is further connected to the label reader 10 that reads package specifying information from a label attached to a package. The processor 34 stores package sorting information input from the label reader 10 in the memory 36. Accordingly, since the label reader 10 acquires the package specifying information from the label attached to the package, when the package specifying information is changed, the projection instruction device 30 can acquire the changed package specifying information from the label attached after the change. In this case, the server 200 may not generate a projection image including the changed sorting information. The projection instruction device 30 can instruct the projector 40 to project a projection image including the sorting information on an upper surface of the package without the server 200. Therefore, a configuration of the package sorting system 100 is simplified.

The processor 34 of the server 200 generates the projection image Gm1, Gm2 (third projection image) including provided information. The projection instruction device 30 instructs the projector 40 to project the projection image Gm1, Gm2 to a gap between a plurality of packages to be sequentially delivered. This enables the projection instruction device 30 to project the projection image Gm1, Gm2 including a message of "Stop of conveyance conveyor" as an alert to the worker, and to project the projection image Gm1, Gm2 including a message of "Keep it up", "One hour left before finishing", or the like for increasing motivation of the worker.

The server 200 acquires information on a delivery destination of the package. When it is determined a loading position of the package on a truck based on the changed sorting information transmitted from the server 200 that has acquired the information on the delivery destination of the package, the processor 34 generates an image indicating the loading position of the package as a part of the projection image Ga. For example, the processor 34 generates the projection image Ga having a word "Front" on an upper surface of a package going to Yokohama to prompt the package to be placed in the front of a loading bed of the truck. In addition, the processor 34 generates the projection image Ga including a word "Back" that prompts a package to be placed in the back of the loading bed of the truck. Accordingly, in a case where a departure point, a stopover point, and an arrival point are set as a delivery route, work efficiency of loading and unloading is improved when a driver who delivers by the truck unloads the package at each point.

In the projection instruction system 5, the projection instruction device 30 that instructs the projector 40 to project a projection image onto a package and the server 200 are communicably connected to each other. The projection instruction device 30 includes the memory 36 that stores package specifying information for identifying each of a plurality of packages to be delivered. The projection instruction device 30 generates the projection image Gb (an example of the first projection image) indicating sorting of the corresponding package based on the package specifying information including sorting information for each package stored in the memory 36, and instructs the projector 40 to project the projection image Gb. The server 200 transmits an external instruction including a change in the package specifying information to the projector 40. When the external instruction is received from the server 200, the projector 40 generates the projection image Ga (an example of the second projection image) indicating sorting of the corresponding package based on the package specifying information including the changed sorting information, and instructs the projector 40 to project the projection image Ga. Accordingly, even when there is an external instruction such as an addition, a change, or a deletion of information on the package to be sorted, the projection instruction device 30 can adaptively support efficiency improvement of package sorting work and delivery, and contribute to efficiency improvement of package distribution.

Each time loading of the package on which the projection image Ga is projected onto a truck is detected, the projection instruction device 30 transmits package specifying information including capacity information on the loaded (corresponding) package to the server 200. The processor 210 of the server 200 calculates a current occupied capacity of each of a plurality of trucks to different delivery destinations based on the package specifying information transmitted from the projection instruction device 30. The processor 210 of the server 200 generates the UI screen 350 indicating a calculation result of the current occupied capacity of each of the plurality of trucks, and displays the UI screen 350 on the display unit 312 of the truck transport management device 300 and the display unit 412 of the warehouse control device 400 (an example of a display device). This enables a delivery manager of the trucks or each worker in charge of sorting to each delivery destination to easily grasp a loading status of the packages onto the truck, for example, how many packages are to be loaded on the current truck and from which package the packages are to be loaded on the next truck.

### [Second Utilization Example of Projection Instruction System]

The server 200 acquires a package capacity and sorting progress information of packages as information on the sorted packages from the package sorting system 100, and formulates and changes a truck delivery plan and a personnel arrangement plan. In a second utilization example, the server 200 and the package sorting system 100 construct a plan data management system that manages the truck delivery plan and the personnel arrangement plan.

First, a package capacity can be measured using the image sensor 20 included in the package sorting system 100 or a 3D sensor installed in a factory or the like according to the related art. When the image sensor 20 of the package sorting system 100 is used, information indicating a size of a package or the like obtained in a process of tracking the package may be used. The 3D sensor measures a distance by performing matching between images of two cameras.

The server 200 updates the truck delivery plan (for example, a plan related to truck arrangement) in real time based on the package capacity of packages acquired from the package sorting system 100. The server 200 outputs the updated truck delivery plan to the truck transport management device 300 and the warehouse control device 400.

The truck transport management device 300 arranges trucks using the truck delivery plan updated in real time. For example, when the truck transport management device 300 is scheduled to have two trucks going to Tokyo in a warehouse, but packages have a size smaller than expected, the truck transport management device 300 can change the two trucks going to Tokyo to one truck (cancel one truck). And, one truck going to Osaka can be suddenly added when just one truck going to Osaka was scheduled and packages have a size larger than expected. This enables the truck transport management device to efficiently arrange the trucks and reduce a truck operation cost.

The server 200 updates the truck delivery plan (for example, a plan related to a delivery fee) in real time based on package capacity information acquired from the package sorting system 100. The server 200 outputs the updated truck delivery plan to the truck transport management device 300.

For example, the server 200 may predict sorting in the future (the next day or the like) and dynamically change a fee for today reception and a fee for the next day. This enables the truck transport management device 300 to solve inconvenience that a fee is constant regardless of the number of packages, that is, regardless of the number of trucks. As described above, it is possible to realize dynamic pricing in which the required number of trucks is determined based on a package capacity of packages to be sorted. Therefore, the truck transport management device can set a delivery fee of packages going to Tokyo at a low price on a day when the number of trucks going to Tokyo is small. The truck transport management device may dynamically determine a future (the next day or the like) fee, or may determine a delivery fee later based on an amount of packages on that day.

Next, sorting progress information can be measured by the package sorting system 100 using the image sensor 20.

The server 200 updates the personnel arrangement plan in real time based on the sorting progress information acquired from the package sorting system 100. The server 200 outputs the updated personnel arrangement plan to the warehouse control device 400.

For example, the server 200 changes the personnel arrangement plan in real time based on the sorting progress information of the packages acquired from the package sorting system 100, and outputs information of the changed personnel arrangement plan to the warehouse control device 400. The warehouse control device 400 arranges workers according to the personnel arrangement plan. For example, sorting work is inefficient in a case where a person in charge of packages going to Tokyo needs to sort by one person even on a day or in a time period when the number of packages going to Tokyo is abnormally large. In such a case, the warehouse control device 400 can support the person in charge of the packages going to Tokyo by temporarily arranging a highly proficient person in charge in sorting of the packages going to Tokyo on the day or in the time period when the number of packages going to Tokyo is abnormally large. This improves efficiency of the sorting work.

As described above, the projection instruction system 5 according to the first embodiment is applied to the plan data management system in which the projection instruction device 30 (an example of a sensor device) to which the image sensor 20 is connected and the server 200 are communicably connected to each other. The projection instruction device 30 detects information on packages (package capacity information, sorting progress information) corresponding to each of a plurality of packages conveyed on the conveyance conveyor 50 (an example of a conveyance device), and transmits the information to the server 200. The server 200 includes the memory 211 that stores plan data (for example, the truck delivery plan and the personnel arrangement plan) related to delivery of each of the plurality of packages. The server 200 updates the plan data stored in the memory 211 based on the information on the packages transmitted from the projection instruction device 30. The server 200 outputs the updated plan data to external control devices (for example, the truck transport management device 300 and the warehouse control device 400) connected to the server 200.

This enables the server 200 to formulate or update the truck delivery plan using the information on the packages acquired from the projection instruction device 30, for example, a package capacity of the packages. The server 200 can formulate or update the personnel arrangement plan using the sorting progress information acquired from the projection instruction device 30.

The projection instruction device 30 detects capacity information on the (corresponding) package to be delivered as the information on the packages by using the distance image sensor 22 included in the image sensor 20. The server 200 updates the truck delivery plan (an example of arrangement plan data of a delivery truck that delivers packages) as the plan data based on the capacity information on each of the plurality of packages. This enables the server 200 to receive the package capacity information from the projection instruction device 30 and output the changed information of the truck delivery plan to the truck transport management device 300 in real time. The truck transport management device 300 can arrange trucks according to the truck delivery plan. Therefore, the truck transport management device 300 can efficiently arrange the trucks and reduce a truck operation cost. The server 200 can receive the package capacity information from the projection instruction device 30, change the truck delivery plan in real time, and change a delivery fee.

The projection instruction device 30 acquires the sorting progress information of the (corresponding) packages loaded on the truck as the information on the packages by using the image sensor 20. The server 200 updates the personnel arrangement plan (an example of arrangement plan data of the workers who sort the packages) as the plan data based on the sorting progress information of each of the plurality of packages. Accordingly, the server 200 receives the sorting progress information of the packages from the projection instruction device 30 and outputs the changed information of the personnel arrangement plan to the warehouse control device in real time. The warehouse control device arranges the workers according to the personnel arrangement plan. For example, the warehouse control device can support a person in charge of the packages going to Tokyo by changing arrangement of a highly proficient person in charge to sorting packages going to Tokyo during a period when the number of packages going to Tokyo is abnormally large.

### (Second Embodiment)

In the first embodiment, an example in which changed sorting information is projected onto a package when the package is shipped has been described. In a second embodiment, an example in which a destination (conveyance destination) in a factory is projected as changed sorting information onto a package when the package is received will be described. A configuration of a projection instruction system 5a according to the second embodiment is substantially the same as that of the projection instruction system 5 according to the first embodiment. Therefore, the same components are denoted by the same reference numerals, description thereof will be simplified or omitted, and different contents will be described.

A package sorting system 100a in the projection instruction system 5a according to the second embodiment is installed in a facility such as a factory where packages are received, or received or shipped. The package sorting system 100a supports work of a worker who sorts one or more packages received and carried in by a plurality of trucks of a transportation company into individual storage spaces when a conveyance destination (destination) in a factory and/or a conveyance destination is a storage place. A conveyance conveyor may be, for example, a belt conveyor or a roller conveyor.

A server 200a according to the second embodiment can receive weather information and traffic information (including traffic jam information) from an external institution (for example, Meteorological Agency, or Japan Road Traffic Information Center). The server 200a is connected to the external institution via one of the networks NW1, NW2, NW3. The server 200a can further receive information such as order (purchase) information and an inspection plan of a package or a component in the package received from the warehouse control device 400a, an inventory quantity of the package or the component stored in a component warehouse, a manufacturing plan for each product manufactured in each manufacturing site, variation information and shipping information of a demand for each product manufactured in each manufacturing site, component type information and component remaining amount information on each component used in each manufacturing site, and the like.

Package specifying information according to the second embodiment includes information assigned to each package among a plurality of destinations for each received package. Here, information of the plurality of destinations includes an inspection place where inspection work of a package is performed, a storage place in a component warehouse where the inspected package is stored as component inventory, a manufacturing place where a component in the package is used, or the like. In order to make it possible to determine a plurality of packages even when the packages are transmitted to the same inspection place, storage place, and manufacturing place, not only information indicating each place but also more detailed information indicating to which place (whom) in each place the packages are to be transmitted may be included.

Further, in the package specifying information, for example, when a component remaining amount is insufficient at the manufacturing site, an order and a priority order of the inspection work, a destination after the inspection work, or the like may be changed by a user operation, and/or calculation of the warehouse control device 400a and/or the server 200a. When the package specifying information is changed by the warehouse control device 400 and/or the user operation, the warehouse control device 400a transmits the changed package specifying information to the server 200a. Here, the server 200a may be located anywhere, may be installed at the same place, or may be installed at a distant place. The server 200a may be included in the package sorting system 100a or may be integrated with the projection instruction device 30a. Therefore, all or a part of an operation of the server 200a may be performed by the package sorting system 100a or the projection instruction device 30a.

Based on these pieces of information transmitted from the warehouse control device 400a, the server 200a may generate the changed package specifying information in which the inspection order, the priority order of the inspection work, the destination, and the like included in the package specifying information are changed. Of course, the server 200a may generate the package specifying information by itself. The server 200a transmits the generated changed package specifying information or the changed package specifying information transmitted from the warehouse control device 400a to the package sorting system 100a installed in a factory 500a.

### (Sorting of Packages in Consideration of Arrangement of Components)

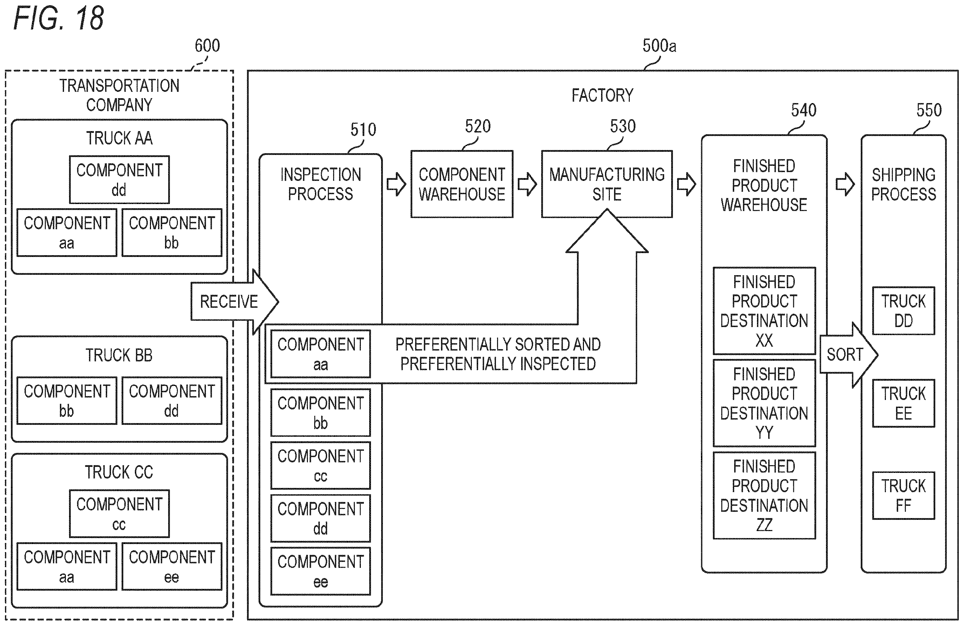

FIG. 18 is a diagram showing an example of a procedure for receiving and shipping packages in the projection instruction system 5a according to the second embodiment. FIG. 18 showing the example in which a plurality of components aa, bb, cc, dd, ee are received as a plurality of packages from a plurality of trucks AA, BB, CC in the factory 500a.

Each of the plurality of trucks AA to CC is a truck owned by any transportation company 600, and delivers each of a plurality of components (packages) ordered by a user to the factory 500a. The truck AA delivers each of the plurality of components aa, bb, dd to the factory 500a. The truck BB delivers each of the plurality of components bb, dd to the factory 500a. The truck CC delivers each of the plurality of components aa, cc, ee to the factory 500a. When each of the plurality of components aa to ee is received, the component is first conveyed to an inspection process 510 in which inspection work is performed. Each of the plurality of components aa to ee received in the factory 500a may be temporarily stored in the component warehouse 520, which is an example of a storage place, before the inspection work. When each of the plurality of components aa to ee is temporarily stored in the component warehouse 520, package specifying information may include information indicating that the component is temporarily stored and information indicating a place where the component is temporarily stored.

In the inspection process 510, at least one received component (package) is inspected by a worker based on an inspection plan. For example, each of the plurality of received components aa to ee is conveyed by the conveyance conveyor. The projection instruction device 30a of the package sorting system 100a reads a label attached to a package in which each of the plurality of components aa to ee conveyed by the conveyance conveyor is stored by the label reader 10, generates a projection image indicating a conveyance instruction to a destination (that is, an inspection place and/or a storage place and/or a manufacturing place) included in the read package specifying information, and instructs the projection image to be projected on an upper surface of the package. The worker conveys a component on which a conveyance instruction to the inspection place is projected to the inspection process 510, a component on which a conveyance instruction to the storage place in the component warehouse 520 is projected to the component warehouse 520, and a component on which a conveyance instruction to the manufacturing place of the manufacturing site 530 is projected to the manufacturing site 530.

Here, when a package is not stored in the component warehouse 520 (an example of the storage place) after the inspection work as in the component aa shown in FIG. 18 and is desired to be directly conveyed to the manufacturing site 530 where the component aa is used, the inspection work may be preferentially performed on the package including the component aa compared to other normal packages (components). The projection instruction device 30a generates a projection image including a conveyance instruction based on information of a destination included in package specifying information read by the label reader 10 and content for prompting priority inspection work, and instructs the projection image to be projected on an upper surface of the package in which the component aa is included. In the example shown in FIG. 18, the component aa is conveyed to the manufacturing site 530 where the component aa is used without being stored in the component warehouse 520 after the inspection work is preferentially performed by the worker based on the instruction indicated by the projection image in the inspection process 510.

Not all the packages received in the factory 500a may be inspected. For example, among the plurality of components bb to ee, only certain component may be inspected. When a plurality of components of the same type are received in a predetermined period, at least one of the components may be inspected (so-called sampling inspection).

In the example in FIG. 18, each of the plurality of components bb to ee is conveyed to the component warehouse 520 (the example of the storage place) after the inspection process 510, and is stored in a storage place for each component as component inventory.

A finished product warehouse 540 is a warehouse in which each of a plurality of products manufactured at the manufacturing site 530 is stored until the product is shipped. Each of the plurality of products stored in the finished product warehouse 540 is collected for each shipping destination, and the processing proceeds to a shipping process 550. For example, a finished product destination XX shown in FIG. 18 is loaded on the truck DD in the shipping process 550 and shipped to a predetermined shipping destination. A finished product destination YY is loaded on the truck EE in the shipping process 550 and shipped to a predetermined shipping destination. A finished product destination ZZ is loaded on the truck FF in the shipping process 550 and shipped to a predetermined shipping destination.

In the shipping process 550, the packages to be loaded are sorted for each truck described in the first embodiment. In the shipping process 550, each of the finished product destinations XX, YY, ZZ as an example of a package storing a plurality of products collected for each shipping destination may have a priority order determined based on weather information, traffic information, truck arrangement information, a loading capacity of a scheduled truck, delivery route information, and the like, and may be shipped according to the priority order.

### [Third Utilization Example of Projection Instruction System]

### (Sorting of Received Packages)

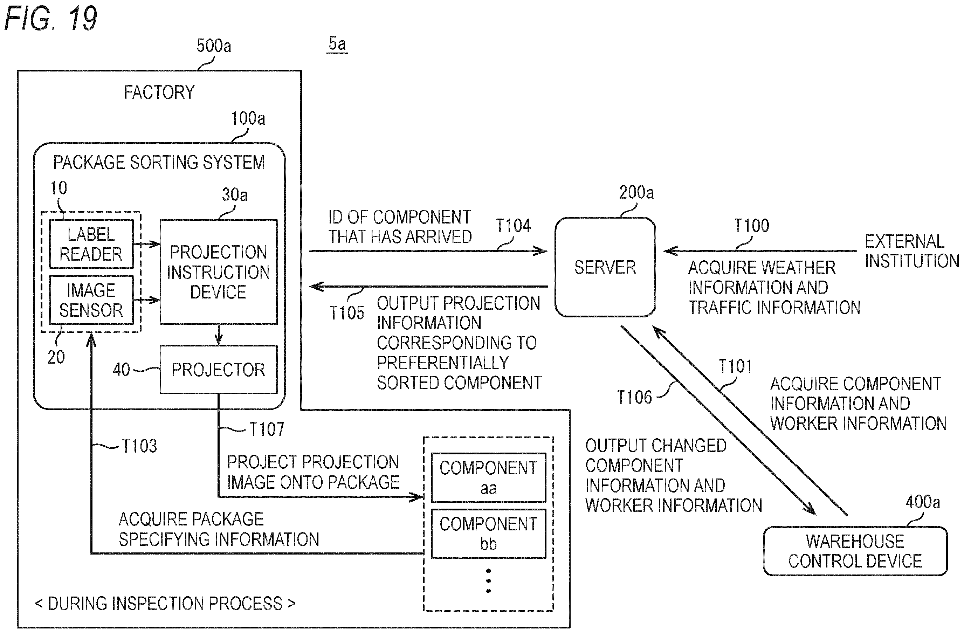

FIG. 19 is a diagram showing a procedure of an operation of sorting received packages in the projection instruction system 5a. FIG. 19 shows an example in which a plurality of components aa, bb, and so on are received as received packages. In sorting of the packages (each of the plurality of components aa, bb, and so on) received in the factory shown in the second embodiment, a worker who sorts the packages determines a destination of the package (a worker who performs inspection work or an inspection place) based on a projection image projected on an upper surface of the package.

The server 200a periodically acquires weather information and traffic information from an external institution as external information (T100). For example, when it is expected that a typhoon comes to Tokyo in the weather information, a component received from Tokyo is received later. In such a case, a situation occurs in which the component is desired to be urgently inspected and delivered to the manufacturing site 530. The traffic information includes traffic jam information.

The server 200a acquires component information and worker information for inspecting the component from the warehouse control device 400a via the network NW3 (T101). For example, when there is a component that is to be received later than an initial reception date among components that are to be received tomorrow, a situation occurs in which the component is desired to be preferentially inspected.

The package sorting system 100a reads a label of the received component by the label reader 10 or the image sensor 20, and acquires package specifying information on the component (T103). The package sorting system 100a transmits information of specifying information capable of specifying a component such as a component ID included in the package specifying information to the server 200a (T104).

The server 200a specifies the package specifying information based on the component ID received from the package sorting system 100a in step T104, and determines a priority order of inspection work for the component and a destination after the inspection. For example, the server 200a generates the package specifying information in which a priority order of inspection work is set to be prioritized for the component aa that is received later than an initial reception date and a destination after the inspection is set to the manufacturing site 530. On the other hand, the server 200a determines that the component bb is received from the initial reception date and may be stored in the component warehouse 520, and does not change the package specifying information. In such a case, the server 200a instructs the package sorting system 100a via the network NW1 with the changed package specifying information on the component aa and the projection image (an example of a second projection image, for example, the projection image Ga) indicating that the component is a preferentially sorted component that is preferentially inspected and then conveyed to the manufacturing site 530 directly (T105).

For example, when a manufacturing plan of a product is changed due to an increase in demand of the product and the number of manufactured products is increased, the server 200a may determine that the number of components used for manufacturing the product is insufficient in a current inspection plan. In such a case, the server 200a may generate package specifying information in which a priority order of inspection work of a package in which a component is packed is changed to be prioritized based on a list of component information on the component used for the product of which the manufacturing plan is changed and package specifying information for each package, and transmit the package specifying information to the package sorting system 100a. The server 200a may generate package specifying information including a conveyance instruction (for example, an instruction indicating a place of a manufacturing site) for conveying a package after inspection work to the manufacturing site where a product is manufactured directly, and transmit the package specifying information to the package sorting system 100a.

When workers who inspect packages are insufficient due to a factor such as a sick leave, the server 200a may generate package specifying information in which an inspection order of the packages included in an inspection plan is changed and transmit the package specifying information to the package sorting system 100a.

The server 200a outputs the changed package specifying information to the warehouse control device 400a via the network NW3 (T106). The warehouse control device 400a displays the changed package specifying information on the display unit 412.

The projection instruction device 30a in the package sorting system 100a projects, for example, a projection image (the example of the second projection image, for example, the projection image Ga) onto a package in which the component aa is stored, based on the changed package specifying information and the projection image transmitted from the server 200a. The projection instruction device 30a projects a projection image (an example of a first projection image, for example, information indicating a storage place in the component warehouse 520) onto a package in which component bb is stored (T107).

The projection image projected on the package (component) when the package specifying information is not changed may include, for example, an ID number capable of identifying the package given when the package arrives and is received, a storage place number indicating a storage place in the component warehouse 520, a name of a manufacturer who manufactured the component packed in the package, a component name, a color set for each type of component, and the like.

The projection image projected on the package (component) when the package specifying information is changed may include, for example, a word "Urgent (Emergency)", a word "Priority", information indicating a manufacturing site where the package (component) is used, information indicating an inspection place, filling or blinking with an emergency designation color such as red or blue, and the like.

As described above, the projection instruction device 30a in the projection instruction system 5a according to the second embodiment is the projection instruction device 30a that instructs an image projection device to project a projection image onto a package received in a factory, and includes processor 34 and memory 36 that specifies each of a plurality of packages and stores package specifying information including information related to a destination in the factory for each package. In cooperation with the memory 36, the processor 34 generates a first projection image for instructing conveyance of the received package to a first destination (for example, a predetermined storage place in the component warehouse 520) that is a storage place based on the package specifying information for each package stored in the memory 36, instructs the projector 40 to project the first projection image, and when the package specifying information for each package stored in the memory 36 indicates a second destination (for example, the manufacturing site 530 where a remaining component amount of a component packed in the package is insufficient), generates a second projection image for instructing conveyance of the package to the second destination, and instructs the projector 40 to project the second projection image.

Accordingly, even when an instruction to add, change, or delete information on the package is issued, the projection instruction system 5a according to the second embodiment can project the projection image using the projector 40 based on the package specifying information of the package received in the factory, and adaptively support improvement in efficiency of package conveyance. Therefore, even when the instruction to add, change, or delete the information on the package is issued, the worker can easily grasp a destination of the package based on the projected projection image.

The processor 34 in the projection instruction device 30a in the projection instruction system 5a according to the second embodiment further includes the communication circuit 39 that communicates with the server 200a, and when the package specifying information stored in the memory 36 is changed according to an external instruction from the server 200a, the processor 34 generates the second projection image for instructing conveyance of the package to the second destination based on the changed package specifying information, and instructs the image projection device to project the second projection image. Accordingly, even when the external instruction to add, change, or delete the information on the received package is issued from the server 200a, the projection instruction device 30a in the projection instruction system 5a according to the second embodiment can project the projection image using the projector 40 based on the package specifying information of the package received in the factory, and can adaptively support improvement in efficiency of package conveyance. Therefore, even when the instruction to add, change, or delete the information on the package is issued, the worker can easily grasp a destination of the package based on the projected projection image.

In a conveyance instruction generated by the projection instruction device 30a in projection instruction system 5a according to the second embodiment, the second destination indicates the manufacturing site where the product using the component is manufactured. Accordingly, the projection instruction system 5a according to the second embodiment can support improvement in efficiency of conveyance of the package (component) to the manufacturing site where a reception date of the package is changed or the components are insufficient.

The second projection image generated by the projection instruction device 30a in the projection instruction system 5a according to the second embodiment is generated to include a word indicating urgent or priority. Accordingly, the projection instruction system 5a according to the second embodiment enables the worker to visualize importance, urgency, or a priority level of the package, thereby adaptively support improvement in efficiency of package conveyance.

The second projection image generated by the projection instruction device 30a in the projection instruction system 5a according to the second embodiment is further connected to a first sensor capable of reading a label assigned to each of the plurality of received packages and specifying the package specifying information. The processor 34 stores the package specifying information input from the first sensor (an example of the label reader 10 or the image sensor 20) in the memory. Accordingly, since the projection instruction system 5a according to the second embodiment can acquire the package specifying information of the received package, processing of confirming reception of each package by the worker can be omitted.

The server 200a in the projection instruction system 5a according to the second embodiment stores package specifying information including component information of a component packed in a package for each package, acquires the component information and a remaining component amount of the component for each destination from an inventory management device (an example of the warehouse control device 400a) in a factory, which records and manages the component information and the remaining component amount of the component used in each of a plurality of destinations, and when there is a destination (for example, the manufacturing site 530) of an insufficient component whose remaining component amount is smaller than a predetermined value, transmits a projection instruction that is a conveyance priority instruction to a package having package specifying information including component information of the insufficient component to the projection instruction device 30a. Accordingly, the projection instruction system 5a according to the second embodiment can manage the remaining amount of the component used in manufacturing site 530, and can adaptively support improvement in efficiency of an inspection process as reception work of the package and conveyance work without causing a shortage of the component in each manufacturing site, thereby improving efficiency of component conveyance in the factory.

Although various embodiments have been described above with reference to the drawings, it is needless to say that the present disclosure is not limited to such embodiments. It will be apparent to those skilled in the art that various changes, modifications, substitutions, additions, deletions, and equivalents can be conceived within the scope of the claims, and it should be understood that such changes and the like also belong to the technical scope of the present disclosure. Components in the various embodiments described above may be combined in a range without deviating from the spirit of the invention.

For example, in the first embodiment described above, the projection image projected on the upper surface of the package by the projector 40 is a circular image, and may be a polygonal image such as a rectangle or a triangle. The projection image is not limited to a still image, and may be an animation. Examples of the animation include blinking, enlarging or reducing the projection image, and changing a color of the projection image. The projector may project, without being limited to the upper surface of the package, the projection image on a surface (a front surface, a back surface, a side surface, or the like) of the package so that the worker can easily sort.

The present application is based on a Japanese patent application (Japanese Patent Application No. 2019-238999) filed on December 27, 2019, the contents of which are incorporated herein by reference.

### INDUSTRIAL APPLICABILITY

The present disclosure is useful because, even when an external instruction to add, change, or delete information on a package to be sorted is issued during package sorting, improvement in efficiency of package sorting work and delivery can be adaptively supported, which contributes to improvement in efficiency of package distribution.

### REFERENCE SIGNS LIST

5, 5a projection instruction system
10 label reader
20 image sensor
22 distance image sensor
24 color image sensor
30, 30a projection instruction device
32 input unit
34 processor
36 memory
38 output unit
39 communication circuit
40 projector
100, 100a package sorting system
200, 200a server
210 processor
211 memory
212 display unit
213 output unit
214 reception unit
300 truck transport management device
400, 400a warehouse control device
520 component warehouse
530 manufacturing site
aa, bb, cc, dd, ee component
NW1, NW2, NW3 network

## Claims

1. A projection instruction device configured to instruct an image projection device to project a projection image onto a package received in a factory, the projection instruction device comprising:
a processor; and
a memory configured to specify each of a plurality of packages and store package specifying information including information related to a destination of each of the plurality of packages in the factory,
wherein, in cooperation with the memory, the processor is configured to
generate a first projection image for instructing conveyance of the received package to a first destination that is a storage place based on the package specifying information for each of the plurality of packages stored in the memory and instruct the image projection device to project the first projection image; and
in a case that the package specifying information for each of the plurality of packages stored in the memory indicates a priority of reception work, generate a second projection image indicating the priority of the reception work and instruct the image projection device to project the second projection image.

2. The projection instruction device according to claim 1, further comprising:
a communication circuit configured to communicate with a server,
wherein, in a case that the package specifying information stored in the memory is changed according to an external instruction from the server, the processor generates the second projection image indicating the priority of the reception work based on the changed package specifying information and instructs the image projection device to project the second projection image.

3. The projection instruction device according to claim 1 or 2,
wherein the second projection image indicates a manufacturing site where a product using a component is manufactured.

4. The projection instruction device according to claim 1 or 2,
wherein the second projection image including a word indicating urgent or priority is generated.

5. The projection instruction device according to claim 1 or 2, wherein the projection instruction device is further connected to a first sensor configured to specify the package specifying information by reading a label assigned to each of the plurality of received packages; and
wherein the processor is configured to store the package specifying information input from the first sensor in the memory.

6. A projection instruction system in which a projection instruction device configured to instruct an image projection device to project a projection image onto a package received in a factory and a server are communicably connected to each other,
wherein the projection instruction device is configured to
specify each of a plurality of packages to be received and store, in a memory, package specifying information including information related to a destination of each of the plurality of packages in the factory;
generate a first projection image for instructing conveyance to a first destination, which is a storage place where the received package is stored, based on the package specifying information for each package stored in the memory and instruct the image projection device to project the first projection image; and
in a case that the package specifying information for each of the plurality of packages stored in the memory indicates a priority of reception work, generate a second projection image indicating the priority of the reception work and instruct the image projection device to project the second projection image;
wherein the server is configured to transmit an external instruction including the package specifying information to the projection instruction device; and
wherein the projection instruction device is configured to instruct the image projection device to project the first projection image or the second projection image based on the external instruction in response to receiving the external instruction from the server.

7. The projection instruction system according to claim 6,
wherein the second projection image indicates a manufacturing site where a product using a component is manufactured.

8. The projection instruction system according to claim 6,
wherein the server is configured to
store package specifying information including component information of a component packed in the package for each of the plurality of packages;
acquire the component information and a remaining component amount of the component for each of a plurality of destinations from an inventory management device in the factory, the inventory management device recording and managing the component information and the remaining component amount of the component used in each of the plurality of destinations; and
in a case that there is a destination of an insufficient component whose remaining component amount is smaller than a predetermined value, transmit a projection instruction that is a conveyance priority instruction to a package having package specifying information including component information of the insufficient component to the projection instruction device.

9. A projection instruction device configured to instruct an image projection device to project a projection image onto a package received in a factory, the projection instruction device comprising:
a processor; and
a memory configured to specify each of a plurality of packages and store package specifying information including information related to a destination of each of the plurality of packages in the factory,
wherein, in cooperation with the memory, the processor is configured to
generate a first projection image for instructing conveyance of the received package to a first destination based on the package specifying information for each of the plurality of packages stored in the memory and instruct the image projection device to project the first projection image; and
in a case that the package specifying information for each package stored in the memory indicates a priority of reception work, generate a second projection image indicating the priority of the reception work and instruct the image projection device to project the second projection image.

10. A projection instruction system in which a projection instruction device configured to instruct an image projection device to project a projection image onto a package received in a factory and a server are communicably connected to each other,
wherein the projection instruction device is configured to
specify each of a plurality of packages to be received and store, in a memory, package specifying information including information related to a destination of each package in the factory;
generate a first projection image for instructing conveyance of the received package to a first destination based on the package specifying information for each package stored in the memory and instruct the image projection device to project the first projection image; and
in a case that the package specifying information for each of the plurality of packages stored in the memory indicates a priority of reception work, generate a second projection image indicating the priority of the reception work and instruct the image projection device to project the second projection image;
wherein the server is configured to transmit an external instruction including a change in the package specifying information to the projection instruction device; and
wherein the projection instruction device is configured to instruct the image projection device to project the first projection image or the second projection image based on the external instruction in response to receiving the external instruction from the server.

11. A projection instruction device configured to instruct an image projection device to project a projection image onto a package received in a factory, the projection instruction device comprising:
a processor; and
a memory configured to store package specifying information for specifying each of a plurality of packages,
wherein, in cooperation with the memory, the processor is configured to
instruct the image projection device to project a first projection image for instructing conveyance of the received package to a first destination based on the package specifying information; and
in a case that the package specifying information is configured to indicate a priority of reception work, instruct the image projection device to project a second projection image indicating the priority of the reception work.

12. A projection instruction system in which a projection instruction device configured to instruct an image projection device to project a projection image onto a package received in a factory and a server are communicably connected to each other,
wherein the projection instruction device is configured to
store package specifying information for specifying each of a plurality of packages in a memory;
instruct the image projection device to project a first projection image for instructing conveyance of the received package to a first destination based on the package specifying information; and
in a case that the package specifying information indicates a priority of reception work, instruct the image projection device to project a second projection image indicating the priority of the reception work;
wherein the server is configured to transmit an external instruction including a change in the package specifying information to the projection instruction device; and
wherein the projection instruction device is configured to instruct the image projection device to project the first projection image or the second projection image based on the external instruction in response to receiving the external instruction from the server.
